# EUROPÄISCHE PATENTSCHRIFT

(11) **EP 1 521 815 B1**
(45) Veröffentlichungstag und Bekanntmachung des Hinweises auf die Patenterteilung: **16.07.2008**
(21) Anmeldenummer: 03762634.8
(22) Anmeldetag: 04.07.2003
(51) Int. Cl.: C09K 19/42, C03C 17/32, G02B 5/28, B32B 17/10, C08F 222/20

(54) **ZUSAMMENSETZUNG ZUR HERSTELLLUNG EINER WÄRMEISOLATIONSBESCHICHTUNG**
COMPOSITION FOR PRODUCING A THERMAL INSULATION COATING
COMPOSITION DE FABRICATION D'UN REVETEMENT D'ISOLATION THERMIQUE

(30) Priorität: 05.07.2002 DE 10230388
(43) Veröffentlichungstag der Anmeldung: 13.04.2005
(73) Patentinhaber: BASF SE, 67056 Ludwigshafen (DE)
(72) Erfinder: PARKER, Robert, 68161 Mannheim (DE); SCHNEIDER, Norbert, 67122 Altrip (DE); WAGENBLAST, Gerhard, 67157 Wachenheim (DE); BÖHM, Arno, 68305 Mannheim (DE)
(74) Vertreter: Reitstötter - Kinzebach
(86) Internationale Anmeldenummer: PCT/EP2003/007201
(87) Internationale Veröffentlichungsnummer: WO 2004/005427

(56) Entgegenhaltungen:
- WO-A-02/076988
- DE-A- 19 745 647
- US-A- 5 942 030
- US-B1- 6 180 025

## Beschreibung

Die vorliegende Erfindung betrifft eine Zusammensetzung zur Herstellung einer Wärmeisolationsbeschichtung, die wenigstens eine Strahlung absorbierende Verbindung und wenigstens eine IR-Reflektor-Komponente umfasst, eine Wärmeisolationsbeschichtung, die diese orientierte, gehärtete Zusammensetzung umfasst, und ein Verfahren zu deren Herstellung.

Das Problem der Abschirmung von Wärmestrahlung stellt sich insbesondere bei der Isolation von Wohn-, Büro- oder Industriebauten, insbesondere bei solchen mit großzügigen Fensterflächen, aber auch bei Transportmitteln, wie Autos und öffentlichen Verkehrsmitteln.

Es ist bekannt, zur Wärmeisolation, insbesondere zur Abschirmung von Wärmestrahlung im Wellenlängenbereich zwischen 800 nm und 2000 nm, Materialien einzusetzen, die Wärmestrahlung weitgehend reflektieren. Derartige Materialien können beispielsweise cholesterische IR-reflektierende Schichten sein.

Beim Erwärmen formanisotroper Stoffe können flüssigkristalline Phasen, sogenannte Mesophasen, auftreten. Die einzelnen Phasen unterscheiden sich durch die räumliche Anordnung der Molekülschwerpunkte einerseits sowie durch die Molekülanordnung hinsichtlich der Längsachsen andererseits (G.W. Gray, P.A Winsor, Liquid Crystals and Plastic Crystals, Ellis Horwood Limited, Chichester, 1974).

Die nematisch flüssigkristalline Phase zeichnet sich durch Parallelorientierung der Molekül-Längsachsen aus (eindimensionaler Ordnungszustand). Unter der Voraussetzung, dass die die nematische Phase aufbauenden Moleküle chiral sind, entsteht eine sogenannte chirale nematische (cholesterische) Phase, bei der die Längsachse der Moleküle eine zu ihr senkrechte, helixartige Überstruktur ausbilden (H. Baessler, Festkörperprobleme XI, 1971). Als Ganghöhe bezeichnet man den Abstand zwischen zwei gedachten Schichten mit identischer Ausrichtung der Moleküllängsachsen.

Der chirale Molekülteil kann sowohl im flüssigkristallinen Molekül selbst vorhanden sein als auch als Dotierstoff zur nematischen Phase gegeben werden, wodurch die chiral nematische Phase induziert wird. Dieses Phänomen wurde zuerst an Cholesterolderivaten untersucht (z.B. H. Baessler, M. M. Labes, J. Chem. Phys. 52, 631 (1970)). Durch Änderung der Konzentration eines chiralen Dotierstoffes kann die Ganghöhe und damit der Wellenlängenbereich selektiv reflektierter Strahlung einer chiralen nematischen Schicht variiert werden.

Die chiral nematische Phase hat besondere optische Eigenschaften: eine hohe optische Rotation sowie einen ausgeprägten Zirkulardichroismus, der durch Selektivreflektion von zirkular polarisiertem Licht innerhalb der chiral nematischen Schicht entsteht. Solche chiral nematischen Systeme bieten für eine praktische Anwendung interessante Möglichkeiten.

Transparente Wärmeisolationsbeschichtungen sind bekannt. So beschreibt die EP-A-727306 ein laminiertes Glas, das aus zwei Glasplatten und einer dazwischenliegenden Schicht besteht, in der ultrafeine Partikel mit dispergiert sind. Die Zwischenschicht dient zur Wärmeisolierung und UV-Absorption.

Die JP-A-281403/92 beschreibt ein Laminat, das aus einer transparenten Platte und einer Beschichtung, die IR-Strahlung über einen breiten Wellenlängenbereich reflektiert, und aus einem Wellenlängen-Filter aus cholesterischem Flüssigkristall besteht, der Wellenlängen des nahen IR selektiv reflektiert und eine hohe Durchlässigkeit für sichtbares Licht besitzt. Die Verwendung von IR absorbierenden Komponenten ist nicht erwähnt.

Die DE-A-19817069 beschreibt IR-Strahlung reflektierende Farbmittel, die sich aus einem IR-Strahlung reflektierenden cholesterischen flüssigkristallinen Polymeren und lichtabsorbierenden Farbmitteln zusammensetzen. Unter Farbmittel werden Verbindungen verstanden, deren Absorptionsmaximum im Bereich von 350 bis 750 nm liegt. Die Verwendung von Komponenten, die IR-Strahlung absorbieren, wird nicht erwähnt.

Die WO-A-99/19267 beschreibt Wärmeisolationsbeschichtungen, die eine oder mehrere cholesterische IR-reflektierende Schichten umfasst. Die Beschichtung ist transparent und farblos. Eine effektive Wärmeisolation erhält man allerdings nur mit mehreren cholesterischen Schichten.

Aufgabe der vorliegenden Erfindung war es, eine möglichst dünne, wirksame, getönte Wärmeisolationsbeschichtung bereitzustellen.

Die Aufgabe wurde durch eine Zusammensetzung zur Herstellung einer Wärmeisolationsbeschichtung gelöst, umfassend
i) wenigstens eine Strahlung absorbierende tert-Alkylphenoxysubstituierte polycyclische Verbindung A der allgemeinen Formel I 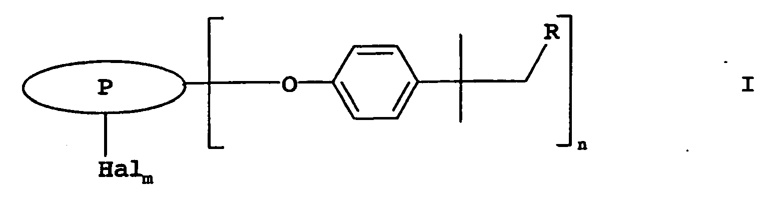 worin
   - P: für einen gegenüber Basen und Nukleophilen stabilen, gegebenenfalls Arylsubstituenten tragenden, konjugierten polycylischen Rest steht, der keine Gruppierungen aus der Gruppe -CO-NH-CO-, -COOH und -CO-O-CO- enthält;
   - R: für einen C₁-C₈-Alkyl-Rest steht, dessen Kohlenstoffkette durch eine oder mehrere Gruppierungen, ausgewählt unter -O-, -S-, -NR¹-, -CO- und -SO₂-, unterbrochen sein kann, wobei die Kohlenstoffkette gegebenenfalls ein- oder mehrfach substituiert ist mit gleichen oder verschiedenen Resten, ausgewählt unter C₁-C₆-Alkoxy oder einen über ein Stickstoffatom gebundenen, 5- bis 7-gliedrigen heterocyclischen Rest, der gegebenenfalls weitere Heteroatome enthält und/oder aromatisch ist, oder für einen C₅-C₈-Cycloalkyl-Rest steht, dessen Kohlenstoffgerüst durch eine oder mehrere Gruppierungen, ausgewählt unter -O-, -S-, -NR¹-, -CO- und -SO₂- unterbrochen sein kann, wobei das Kohlenstoffgerüst gegebenenfalls ein- oder mehrfach durch C₁-C₆-Alkyl substituiert ist;
   - R¹: für Wasserstoff oder C₁-C₆-Alkyl steht;
   - Hal: für Chlor und/oder Brom steht;
   - m: eine Zahl von 0 bis 15 bedeutet;und
   - n: eine Zahl von 1 bis 16 bedeutet, wobei die Summe m + n ≤ 16 ist
   und
ii) wenigstens eine härtbare Infrarot (IR)-Reflektor-Komponente B, die
   a) wenigstens ein achirales nematisches polymerisierbares Monomer und wenigstens ein chirales polymerisierbares Monomer;
   b) wenigstens ein cholesterisches polymerisierbares Monomer;
   c) wenigstens ein cholesterisches vernetzbares Polymer; oder
   d) wenigstens ein cholesterisches Polymer in einem polymerisierbaren Verdünnungsmittel
   enthält.

Die IR-Reflektor-Eigenschaft der Komponente B ist darauf zurückzuführen, dass nach dem Orientieren und Härten der Komponente B wenigstens ein Teil der orientierten, durch Polymerisation der Monomere a) oder b) erhältlichen cholesterische Polymere bzw. wenigstens ein Teil der orientierten Polymere c) oder d) eine Ganghöhe der helikalen Überstruktur aufweisen, die einer Wellenlänge im IR-Spektralbereich entspricht.

Unter Härten versteht man im Rahmen der vorliegenden Erfindung sowohl die Polymerisation von Monomeren als auch das Vernetzen von Polymeren.

Unter Strahlung absorbierenden Verbindungen A sollen solche verstanden werden, die im Spektralbereich des Infrarot (IR-Strahlung), d. h. im Spektralbereich mit einer Wellenlänge von > 750 nm bis etwa 1 mm, vorzugsweise von 751 nm bis etwa 2000 nm, und/ oder im sichtbaren Spektralbereich, d. h. im Spektralbereich mit einer Wellenlänge von 350 bis 750 nm, vorzugsweise von 550 bis 750 nm, und/oder im Spektralbereich des Ultraviolett (UV-Strahlung), d. h. im Spektralbereich mit einer Wellenlänge von 10 nm bis <350 nm, vorzugsweise von 100 nm bis 349 nm, absorbieren. Vorzugsweise absorbieren die Verbindungen A im Spektralbereich des Infrarot, insbesondere von 751 bis 2000 nm, und/oder im sichtbaren Spektralbereich, insbesondere von 550 bis 750 nm. Besonders bevorzugt absorbieren die Verbindungen A im Spektralbereich des Infrarot, insbesondere von 751 bis 2000 nm, und im sichtbaren Spektralbereich, insbesondere von 550 bis 750 nm.

Die Verbindungen A können als Reinsubstanzen oder als Gemische von Stellungsisomeren oder als Stoffgemische eingesetzt werden.

Die Verbindungen A der Formel I sind beispielsweise in der PCT-Anmeldung PCT/EP 02/03279 (WO 02/076988 A) beschrieben und basieren auf einem bei den Reaktionsbedingungen gegenüber Basen und Nukleophilen stabilen, konjugierten polycyclischen Rest P. Insbesondere weist der Rest P keine Gruppierungen aus der Gruppe -CO-NH-CO-, -COOH und -CO-O-CO- auf.

Der Rest P kann Arylsubstituenten tragen, die basisch nicht angreifbar sind, z.B. unsubstituiertes, alkyl- und/oder alkoxysubstituiertes Aryl, insbesondere Phenyl, oder Hetaryl, wie 2-, 3- und 4-Pyridyl und Pyrimidyl. Diese Arylsubstituenten können entweder direkt an das Ringgerüst oder bei den weiter unten aufgeführten polycyclischen Imiden auch an die Imidstickstoffatome gebunden sein.

Der bzw. die tert-Alkylphenoxyreste können bei solchen arylsubstituierten Resten P auch über die Arylsubstituenten an den Rest P gebunden sein, also z.B. bei Diphenyldiketopyrrolopyrrol oder N,N'-Diphenylperylen-3,4:9,10-tetracarbonsäurediimid über die 4- oder 3,5-Positionen des Phenylrestes.

Vorzugsweise bedeutet P einen basenstabilen Rest aus der Gruppe der Naphthaline, Anthracene, Phenanthrene, Tetracene, Perylene, Terrylene, Quaterrylene, Pentarylene und Hexarylene, Anthrachinone, Indanthrone, N-substituierten Naphthalin-1,8-dicarbonsäuremonoimide (im folgenden kurz "Naphthalmonoimide" genannt), N,N'-disubstituierten Naphthalin-1,8:4,5-tetracarbonsäurediimide (kurz "Naphthalimide"), N-substituierten Perylen-3,4-dicarbonsäuremonoimide (kurz "Perylmonoimide"), N,N'-disubstituierten Perylen-3,4:9,10-tetracarbonsäurediimide (kurz "Perylimide"), N,N'-disubstituierten Terrylen-3,4:11,12-tetracarbonsäurediimide (kurz "Terrylimide"), N,N'-disubstituierten Quaterrylen-3,4:13,14-tetracarbonsäurediimide (kurz "Quaterrylimide"), Acridine, Carbazole, Dibenzofurane, Dinaphthofurane, Benzimidazole, Benzthiazole, Phenazine, Dioxazine, Chinacridone, Metallphthalocyanine, Metallnaphthalocyanine, Metallporphyrine, Cumarine, Dibenzofuranone, Dinaphthofuranone, Benzimidazolone, Indigoverbindungen, Thioindigoverbindungen, Chinophthalone, Naphthochinophthalone und Diketopyrrolopyrrole.

Besonders bevorzugt sind dabei Reste P aus der Gruppe der Naphthaline, Chinacridone, Diketopyrrolopyrrole, Dioxazine, Indanthrone, Metallphthalocyanine, Metallnaphthalocyanine, Naphthalmonoimide, Perylmonoimide, Perylimide, Terrylimide und Quaterrylimide, wobei die Metallphthalocyanine, Metallnaphthalocyanine, Metallporphyrine, Terrylimide und Quaterrylimide ganz besonders bevorzugt sind. Davon sind insbesondere die Quaterrylimide bevorzugt.

Die die Verbindungen I charakterisierenden tert-Alkylphenoxyreste sowie die gegebenenfalls zusätzlich vorhandenen Halogenatome können direkt oder, wie oben bereits beschrieben, über gegebenenfalls vorhandene Arylsubstituenten an das Ringgerüst der Reste P gebunden sein. Selbstverständlich können auch beide Bindungsformen in einer Verbindung I auftreten. Größere Reste P, wie Perylmonoimide, Perylimide, Terrylimide und Quaterrylimide, tragen die tert-Alkylphenoxyreste bevorzugt direkt am Ringgerüst oder weisen zumindest direkt gebundene tert-Alkylphenoxyreste zusätzlich zu arylengebundenen tert-Alkylphenoxyresten auf.

Je nach Größe des konjugierten Ringgerüsts enthalten die Verbindungen I mindestens 1 und bis zu 16 (n: 1 bis 16), insbesondere 2 bis 8, tert-Alkylphenoxyreste.

Beispielhaft seien für die besonders bevorzugten Reste P die generell geeigneten und die bevorzugten Bereiche für die Summe m+n genannt: Naphthaline: 1 bis 4, insbesondere 1 bis 2; Chinacridone: 1 bis 8, insbesondere 2 bis 4; Diketopyrrolopyrrole: 1 bis 6, insbesondere 2 bis 4; Dioxazine: 1 bis 8, insbesondere 2 bis 4; Indanthrone: 1 bis 6, insbesondere 2 bis 4; Metallphthalocyanine: 1 bis 16, insbesondere 4 bis 8; Metallnaphthalocyanine: 1 bis 16, insbesondere 8 bis 16; Naphthalmonoimide: 1 bis 4, insbesondere 1 bis 2; Perylmonoimide: 1 bis 6, insbesondere 1 bis 3; Perylimide: 1 bis 8, insbesondere 2 bis 6; Terrylimide: 1 bis 12, insbesondere 2 bis 8; Quaterrylimide: 1 bis 14, insbesondere 2 bis 8.

Weisen die Reste P zusätzliche Arylsubstituenten auf, die nicht zur Bindung der tert-Alkylphenoxyreste dienen, erniedrigt sich natürlich die maximal mögliche Summe m+n entsprechend.

Die tert-Alkylphenoxyreste sowie die gegebenenfalls vorhandenen Hal-Substituenten sind über den Rest P vorzugsweise statistisch verteilt.

Im folgenden sind geeignete Beispiele für die in Formel I auftretenden Reste R und R¹ sowie für deren Substituenten aufgeführt.

C₁-C₆-Alkyl steht beispielsweise für Methyl, Ethyl, Propyl, Isopropyl, Butyl, Isobutyl, sec-Butyl, tert-Butyl, Pentyl, Isopentyl, Neopentyl, tert-Pentyl, Hexyl und 2-Methylpentyl. C₁-C₈-Alkyl steht neben diesen Resten weiterhin beispielsweise für Heptyl, 1-Ethylpentyl, Octyl, 2-Ethylhexyl und Isooctyl.

C₁-C₈-Alkyl, dessen Kohlenstoffkette durch eine oder mehrere Gruppierungen -O- unterbrochen sein kann, steht beispielsweise für 2-Methoxyethyl, 2-Ethoxyethyl, 2-Propoxyethyl, 2-Isopropoxyethyl, 2-Butoxyethyl, 2- und 3-Methoxypropyl, 2- und 3-Ethoxypropyl, 2-und 3-Propoxypropyl, 2- und 3- Butoxypropyl, 2- und 4-Methoxybutyl, 2- und 4-Ethoxybutyl, 2- und 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- und 4-Butoxybutyl, 4,8-Dioxadecyl, 3,6,9-Trioxadecyl und 3,6,9-Trioxaundecyl.

C₁-C₉-Alkyl, dessen Kohlenstoffkette durch eine oder mehrere Gruppierungen -S- unterbrochen sein kann, steht beispielsweise für 2-Methylthioethyl, 2-Ethylthioethyl, 2-Propylthioethyl, 2-Isopropylthioethyl, 2-Butylthioethyl, 2- und 3-Methylthiopropyl, 2- und 3-Ethylthiopropyl, 2- und 3-Propylthiopropyl, 2- und 3- Butylthiopropyl, 2- und 4-Methylthiobutyl, 2- und 4-Ethylthiobutyl, 2-und 4-Propylthiobutyl, 3,6-Dithiaheptyl, 3,6-Dithiaoctyl, 4,8-Dithianonyl, 3,7-Dithiaoctyl, 3,7-Dithianonyl, 4,7-Dithiaoctyl, 4,7-Dithianonyl, 2- und 4-Butylthiobutyl, 4,8-Dithiadecyl, 3,6,9-Trithiadecyl und 3,6,9-Trithiaundecyl.

C₁-C₈-Alkyl, dessen Kohlenstoffkette durch eine oder mehrere Gruppierungen -NR¹- unterbrochen sein kann, steht beispielsweise für 2-Monomethyl- und 2-Monoethylaminoethyl, 2-Dimethylaminoethyl, 2-und 3-Dimethylaminopropyl, 3-Monoisopropylaminopropyl, 2- und 4-Monopropylaminobutyl, 2- und 4-Monomethylaminobutyl, 6-Methyl-3,6-diazaheptyl, 3,6-Dimethyl-3,6-diazaheyptyl, 3,6-Diazaoctyl, 3,6-Dimethyl-3,6-diazaoctyl, 9-Methyl-3,6,9-triazadecyl, 3,6,9-Trimethyl-3,6,9-triazadecyl, 3,6,9-Triazaundecyl und 3,6,9-Trimethyl-3,6,9-triazaundecyl.

C₁-C₈-Alkyl, dessen Kohlenstoffkette durch eine oder mehrere Gruppierungen -CO- unterbrochen sein kann, steht beispielsweise für-Propan-2-on-1-yl, Butan-3-on-1-yl, Butan-3-on-2-yl und 2-Ethylpentan-3-on-1-yl.

C₁-C₈-Alkyl, dessen Kohlenstoffkette durch eine oder mehrere Gruppierungen -SO₂- unterbrochen sein kann, steht beispielsweise für 2-Methylsulfonylethyl, 2-Ethylsulfonylethyl, 2-Propylsulfonylethyl, 2-Isopropylsulfonylethyl, 2-Buthylsulfonylethyl, 2- und 3-Methylsulfonylpropyl, 2- und 3-Ethylsulfonylpropyl, 2- und 3-Propylsulfonylpropyl, 2- und 3-Butylsulfonylpropyl, 2- und 4-Methylsulfonylbutyl, 2- und 4-Ethylsulfonylbutyl, 2- und 4-Propylsulfonylbutyl und 4-Butylsulfonylbutyl.

C₁-C₆-Alkoxy steht z. B. für Methoxy, Ethoxy, Propoxy, Isopropoxy, Butoxy, Isobutoxy, sec-Butoxy, tert-Butoxy, Pentoxy, Isopentoxy, Neopentoxy, tert-Pentoxy und Hexoxy.

Der über ein Stickstoffatom gebundene 5- bis 7-gliedrige heterocyclischer Rest, der gegebenenfalls weitere Heteroatome enthält und/oder aromatisch sein kann, steht beispielsweise für Pyrrol, Pyrazol, Imidazol, Triazol, Pyrrolidin, Pyrazolin, Pyrazolidin, Imidazolin, Imidazolidin, Pyridin, Pyridazin, Pyrimidin, Pyrazin, Triazin, Piperidin, Piperazin, Oxazol, Isooxazol, Thiazol, Isothiazol, Indol, Chinolin, Isochinolin oder Chinaldin.

C₅-C₈-Cycloalkyl, dessen Kohlenstoffgerüst durch eine oder mehrere Gruppierungen, ausgewählt unter -O-, -S-, NR¹-, -CO- und -SO₂-, unterbrochen sein kann, wobei das Kohlenstoffgerüst ein- oder mehrfach durch C₁-C₆-Alkyl substituiert sein kann, steht beispielsweise für Cyclopentyl, 2- und 3-Methylcyclopentyl, 2- und 3-Ethylcyclopentyl, Cyclohexyl, 2-, 3- und 4-Methylcyclohexyl, 2-, 3- und 4-Ethylcyclohexyl, 3- und 4-Propylcyclohexyl, 3- und 4-Isopropylcyclohexyl, 3- und 4-Butylcyclohexyl, 3- und 4-sec-Butylcyclohexyl, 3- und 4-tert-Butylcyclohexyl, Cycloheptyl, 2-, 3- und 4-Methylcycloheptyl, 2-, 3- und 4-Ethylcycloheptyl, 3- und 4-Propylcycloheptyl, 3- und 4-Isopropylcycloheptyl, 3- und 4-Butylcycloheptyl, 3- und 4-sec-Butylcycloheptyl, 3- und 4-tert-Butylcycloheptyl, Cyclooctyl, 2-, 3-, 4- und 5-Methylcyclooctyl, 2-, 3-, 4- und 5-Ethylcyclooctyl, 3-, 4- und 5-Propylcyclooctyl, 2-Dioxanyl, 4-Morpholinyl, 2- und 3-Tetrahydrofuryl, 1-, 2- und 3-Pyrrolidinyl und 1-, 2-, 3- und 4-Piperidyl.

Als Beispiele für bevorzugte tert-Alkylphenoxyreste seien p-(1,1-Dimethylpropyl)phenoxy, p-(1,1-Dimethylbutyl)phenoxy, p-(1,1-Dimethylpentyl)phenoxy, p-(1,1,3,3-Tetramethylbutyl)phenoxy, p-(2-Cyclopentyl-1,1-dimethylethyl)phenoxy, p-(2-Cyclohexyl-1,1-dimethylethyl)phenoxy, p-(2-Cycloheptyl-1,1-dimethylethyl)phenoxy und p-(1,1-Dimethyl-2-(4-morpholinyl)ethyl)phenoxy genannt. Besonders bevorzugt ist p-(1,1,3,3-Tetramethylbutyl)phenoxy.

Die besonders bevorzugten Naphthalmonoimide, Perylmonoimide, Perylimide, Terrylimide und Quaterrylimide tragen insbesondere folgende basenstabile Substituenten R² an den Imidstickstoffatomen:
C₁-C₃₀-Alkyl, dessen Kohlenstoffkette durch eine oder mehrere Gruppierungen, ausgewählt unter -O-, -S-, -NR¹-, -CO- und -SO₂-, unterbrochen sein kann, wobei die Kohlenstoffkette gegebenenfalls ein- oder mehrfach substituiert ist mit gleichen oder verschidenen Resten, ausgewählt unter C₁-C₆-Alkoxy und einen über ein Stickstoffatom gebundenen, 5- bis 7-gliedrigen heterocyclischen Rest, der gegebenenfalls weitere Heteroatome enthält und/oder aromatisch ist;
C₅-C₈-Cycloalkyl, dessen Kohlenstoffgerüst durch eine oder mehrere Gruppierungen, ausgewählt unter -O-, -S-, -NR¹-, -CO- und -SO₂-, unterbrochen sein kann, wobei das Kohlenstoffgerüst gegebenenfalls ein- oder mehrfach durch C₁-C₆-Alkyl substituiert ist;

Aryl oder Hetaryl, wie Phenyl, Naphthyl, Anthracenyl, Phenantrenyl, Pyrrolyl, Pyrazolyl, Imidazolyl, Oxazolyl, Thiazolyl, Pyridinyl, Pyridazinyl, Pyrimidinyl, Pyrazinyl, Indolyl, Chinolinyl, Isochinolinyl oder Chinaldinyl, das jeweils ein- oder mehrfach durch C₁-C₁₈-Alkyl, C₁-C₆-Alkoxy, Cyano, -CONH-R¹ und/oder -NH-COR¹ substituiert sein kann.

Im einzelnen seien für diese Substituenten ergänzend zu den bereits genannten Resten folgende Reste beispielhaft aufgeführt:
C₁-C₃₀-Alkyl steht neben den zuvor genannten Alkylresten weiterhin beispielsweise für Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die Bezeichnungen Isononyl, Isodecyl und Isotridecyl sowie die weiter oben angeführte Bezeichnung Isooctyl sind Trivialbezeichnungen und stammen von den nach der Oxosynthese erhaltenen Alkoholen);
Durch die Gruppierung -O- oder -S- unterbrochenes C₁-C₃₀-Alkyl steht beispielsweise für 3,6,9-Trioxadodecyl, 3,6,9,12-Tetraoxatridecyl und 3,6,9,12-Tetraoxatetradecyl; 3,6,9-Trithiadodecyl, 3,6,9,12-Tetrathiatridecyl und 3,6,9,12-Tetrathiatetradecyl;
Die Substituenten -CO-NHR¹ und -NH-COR¹ stehen beispielsweise für Carbamoyl, Methylaminocarbonyl, Ethylaminocarbonyl, Propylaminocarbonyl, Butylaminocarbonyl, Pentylaminocarbonyl, Hexylaminocarbonyl, Heptylaminocarbonyl, Octylaminocarbonyl, Nonylaminocarbonyl und Decylaminocarbonyl; Formylamino, Acetylamino und Propionylamino;
Aryl oder Hetaryl, das jeweils ein- oder mehrfach durch C₁-C₁₈-Alkyl, C₁-C₆-Alkoxy, Cyano, -CONH-R¹ und/oder -NH-COR¹ substituiert sein kann, steht beispielsweise für 2-, 3- und 4-Methylphenyl, 2,4-, 2,5-, 3,5- und 2,6-Dimethylphenyl, 2,4,6-Trimethylphenyl, 2-, 3- und 4-Ethylphenyl, 2,4-, 2,5-, 3,5- und 2,6-Diethylphenyl, 2,4,6-Triethylphenyl, 2-, 3- und 4-Propylphenyl, 2,4-, 2,5-, 3,5-und 2,6- Dipropylphenyl, 2,4,6-Tripropylphenyl, 2-, 3- und 4-Isopropylphenyl, 2,4-, 2,5-, 3,5- und 2,6-Diisopropylphenyl, 2,4,6-Triisopropylphenyl, 2-, 3- und 4-Butylphenyl, 2,4-, 2,5-, 3,5- und 2,6-Dibutylphenyl, 2,4,6-Tributylphenyl, 2-, 3- und 4-Isobutylphenyl, 2,4-, 2,5-, 3,5- und 2,6-Diisobutylphenyl, 2,4,6-Triisobutylphenyl, 2-, 3- und 4-sec-Butylphenyl, 2,4-, 2,5-, 3,5- und 2,6-Di-sec-butylphenyl, 2,4,6-Tri-sec-butylphenyl, 2-, 3- und 4-tert-Butylphenyl, 2,4-, 2,5-, 3,5- und 2,6-Di-tert-butylphenyl und 2,4,6-Tri-tert-Butylphenyl; 2-, 3- und 4-Methoxyphenyl, 2,4-, 2,5-, 3,5- und 2,6-Dimethoxyphenyl, 2,4,6-Trimethoxyphenyl, 2-, 3- und 4-Ethoxyphenyl, 2,4-, 2,5-, 3,5- und 2,6-Diethoxyphenyl, 2,4,6-Triethoxyphenyl, 2-, 3- und 4-Propoxyphenyl, 2,4-, 2,5-, 3,5- und 2,6-Dipropoxyphenyl, 2-, 3- und 4-Isopropoxyphenyl, 2,4-, 2,5-, 3,5- und 2,6-Diisopropoxyphenyl und 2-, 3- und 4-Butoxyphenyl; 2-, 3- und 4-Cyanophenyl; 3- und 4-Carboxamidophenyl, 3- und 4-N-(Methyl)carboxamidophenyl und 3- und 4-N-(Ethyl)carboxamidophenyl; 3- und 4-Acetylaminophenyl, 3- und 4-Propionylaminophenyl und 3- und 4-Butyrylaminophenyl.

Besonders bevorzugte Verbindungen A sind solche, in denen P für N,N'-disubstituierte Quaterrylen-3,4:13,14-tetracarbonsäurediimide der Formel II steht 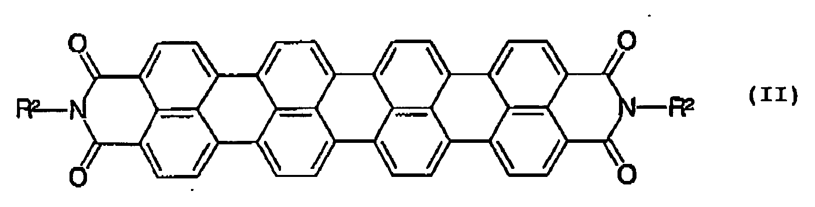 wobei R² denn vorstehend genannten, basenstabilen Imidostickstoffatom-Substituenten entspricht.

In besonders bevorzugten Verbindungen A der Formel I, in denen P für ein Quaterrylimid II steht, stehen
R vorzugsweise für H, Methyl, Ethyl, Propyl, Isopropyl, Butyl, tert-Butyl, Cyclopentyl, Cyclohexyl, Cycloheptyl, oder Morpholinyl, besonders bevorzugt für H, Methyl, Ethyl, Butyl oder tert-Butyl und insbesondere für tert-Butyl;
R² vorzugsweise für substituiertes Phenyl, besonders bevorzugt für ein- bis dreifach mit C₁-C₄-Alkyl substituiertes Phenyl und insbesondere für 2,6-Diisopropylphenyl;
n vorzugsweise für 2 bis 10, besonders bevorzugt für 4 bis 8 und insbesondere für 6; und
m vorzugsweise für 0 bis 4, besonders bevorzugt für 0 bis 2 und insbesondere für 0.

Die n tert-Alkylphenoxysubstituenten sowie die m Substituenten Hal sind über das Quaterrylensystem vorzugsweise statistische verteilt. Besonders bevorzugt befinden sich auf den beiden Seiten einer gedachten Achse zwischen den beiden Imid-Stickstoffatomen jeweils gleich viele Substituenten.

Die Verbindungen der Formel I können mittels eines Verfahrens erhalten werden, bei dem man ein Halogenid der allgemeinen Formel III 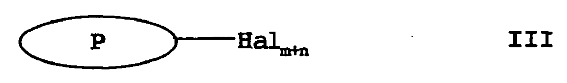 in einem inerten stickstoffbasischen Lösungsmittel in Anwesenheit einer Base mit einem tert-Alkylphenol der allgemeinen Formel IV 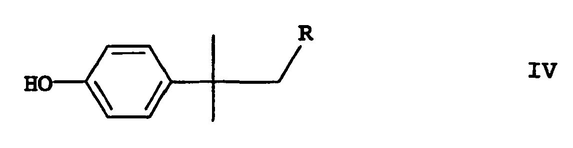 umsetzt.

Als inertes stickstoffbasisches Lösungsmittel eignen sich hierfür insbesondere polare Lösungsmittel, vor allem Stickstoffheterocyclen, wie Pyridin, Pyrimidin, Chinolin, Isochinolin, Chinaldin und vorzugsweise N-Methylpyrrolidon, sowie Carbonsäureamide, wie N,N-Dimethylformamid und N,N-Dimethylacetamid.

Die Lösungsmittelmenge beträgt abhängig von der Löslichkeit des Halogenids III üblicherweise 2 bis 40 g, vorzugsweise 4 bis 25 g, Lösungsmittel je g Halogenid III.

Als Base sind insbesondere nicht oder nur schwach nukleophile Verbindungen geeignet. Beispiele für solche Basen sind Alkalimetallhydroxide, wie Kalium- und Natriumhydroxid, Alkalimetallcarbonate, wie Kalium- und Natriumcarbonat, sowie Alkalimetallalkoholate tertiärer Alkohole, wie Lithium-, Natrium- und Kaliumtert-butylat, die in wasserfreier Form zum Einsatz kommen.

In der Regel werden 0,8 bis 1,5, vorzugsweise 1,0 bis 1,2, Moläquivalente Base je mol zu substituierendes Halogenatom eingesetzt.

Die als Ausgangsstoffe eingesetzten Halogenide III sind allgemein bekannt oder nach bekannten Methoden durch Umsetzung der nichthalogenierten konjugierten polycyclischen Verbindungen mit Halogenierungsmitteln, insbesondere den elementaren Halogenen, erhältlich. Halogenide III, die die Halogenatome an Arylsubstituenten gebunden enthalten, sind bekanntermaßen in der Regel über die Einführung der halogenierten Arylreste in das polycyclische System zugänglich.

Das Molverhältnis Halogenid III zu Phenol IV hängt von der Anzahl der zu substituierenden Halogenatome ab. Im allgemeinen verwendet man 1 bis 2, bevorzugt 1 bis 1,3, mol Phenol IV je mol auszutauschendes Halogenatom im Halogenid III.

Die Reaktionstemperatur liegt üblicherweise im Bereich von 50 bis 200°C, vorzugsweise bei 60 bis 140°C.

Es empfiehlt sich, die Umsetzung unter Schutzgas, z.B. Stickstoff oder Argon, durchzuführen.

Die Reaktionszeit beträgt in Abhängigkeit von der Reaktivität des Halogenids III 2 bis 48 h.

Durch Auswahl der Reaktionsbedingungen - Menge an Phenol IV und Base sowie der Reaktionstemperatur - kann der Halogenaustausch vorteilhaft gesteuert werden, so daß sowohl Produkte I, in denen alle Halogenatome ausgetauscht sind (m=0), als auch Produkte I, die noch Halogen enthalten, problemlos hergestellt werden können. Gewünschtenfalls kann das Halogen anschließend noch aus dem Produkt I entfernt werden. Aus einem Ausgangsprodukt III können also verschiedene Produkte I nach Wunsch hergestellt werden.

Bei der Komponente B sind bevorzugte Monomere der Gruppe a) in der WO 99/19267 sowie in der deutschen Patentanmeldung P 10203938.0 (DE 10203938) beschrieben, auf die hiermit in vollem Umfang Bezug genommen wird. Bevorzugt ist das achirale nematische polymerisierbare Monomer der Gruppe a) difunktionell polymerisierbar und entspricht vorzugsweise der allgemeinen Formel V

Z¹-(Y¹-A¹)_{V}-Y²-M-Y³-(A²-Y⁴)_{w}-Z² (V)

worin
- Z¹, Z²: für gleiche oder verschiedene reaktive Gruppen stehen, über die eine Polymerisation erfolgen kann, bzw. Reste, die solche reaktiven Gruppen enthalten, wobei es sich bei den reaktiven Gruppen um C=C-Doppelbindungen, C≡C-Dreifachbindungen, Oxiran-, Thiiran-, Aziran-, Cyanat-, Thiocyanat-, Isocyanat-, Carbonsäure-, Hydroxy- oder Aminogruppen handelt, wobei C=C-Doppelbindungen besonders bevorzugt sind;
- Y¹, Y², Y³, Y⁴: unabhängig voneinander für eine chemische Bindung, O, S, -CO-O-, -O-CO-, -O-CO-O-, -CO-S-, -S-CO-, -CO-N(R³)-, -N(R³)-CO-, -N(R³)-CO-O-, -O-CO-N(R³)-, -N(R³)-CO-N(R³)-, -CH₂-O-, -O-CH₂-, vorzugsweise -CO-O-, -O-CO- oder -O-CO-O- stehen,
wobei R³ für Wasserstoff oder C₁-C₄-Alkyl steht;
- A¹, A²: für gleiche oder verschiedene Spacer stehen, beispielsweise lineare C₂-C₃₀-Alkylengruppen, vorzugsweise C₂-C₁₂-Alkylengruppen, die durch Sauerstoff, Schwefel, gegebenenfalls einfach substituiertem Stickstoff unterbrochen sein können, wobei diese unterbrechenden Gruppen nicht benachbart sein dürfen; wobei geeignete Aminsubstituenten C₁-C₄-Alkylgruppen umfassen, wobei die Alkylenketten durch Fluor, Chlor, Brom, Cyan, Methyl oder Ethyl substituiert sein können; und wobei besonders bevorzugt A¹ und A² für -(CH₂)-ₙ mit n = 2 bis 6 stehen;
- v, w: für 0 oder 1 steht;
- M: eine mesogene Gruppe bedeutet, die vorzugsweise die allgemeine Formel VI besitzt:

(T-Y⁵)ₘ-T (VI)
worin
- T: für gleiche oder verschiedene zweiwertige isocycloaliphatische, heterocycloaliphatische, isoaromatische oder heteroaromatische Reste, vorzugsweise 1,4-gebundene unsubstituierte oder 1- bis mehrfach, z.B. 1- bis 4-fach, substituierte Benzolringe steht, 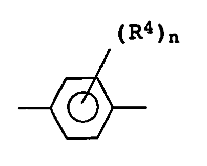
worin
- R⁴: für Fluor, Chlor, Brom, C₁-C₂₀-Alkyl, C₁-C₂₀-Alkoxy, C₁-C₂₀-Alkylcarbonyl, C₁-C₂₀-Alkylcarbonyloxy, Hydroxy, Nitro, CHO oder CN, vorzugsweise für Chlor, Brom oder C₁-C₄-Alkyl und insbesondere für Methyl steht; und
- n: für eine ganze Zahl von 0 bis 4, vorzugsweise 0 bis 2 und insbesondere für 0 oder 1 steht;
- Y⁵: für gleiche oder verschiedene Brückenglieder -CO-O-, -O-CO-, -CH₂-O-, -O-CH₂-, -CO-S-, -S-CO-, -CH₂-S-, -S-CH₂, -CH=N- oder -N=CH- oder eine direkte Bindung, vorzugsweise -CO-O- oder -O-CO- steht, und
- m: eine ganze Zahl von 0 bis 3, vorzugsweise 0, 1 oder 2, bedeutet.

Vorzugsweise enthält die mesogene Gruppe einen substituierten 1,4-Dioxybenzol-Baustein, insbesondere einen Methyl-substituierten 1,4-Dioxybenzol-Baustein.

Besonders bevorzugte mesogene Gruppen weisen die folgenden Strukturen VII auf: 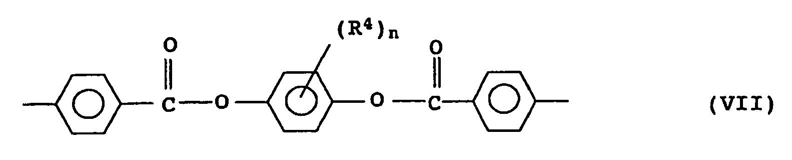 worin
- R⁴: für Fluor, Chlor, Brom, C₁-C₂₀-Alkyl, C₁-C₂₀-Alkoxy, C₁-C₂₀-Alkylcarbonyl, C₁-C₂₀-Alkylcarbonyloxy, Hydroxy, Nitro, CHO oder CN steht und
- n: für eine ganze Zahl von 0 bis 4 steht.

Besonders bevorzugt steht in der mesogenen Gruppe VII R⁴ für Chlor, Brom oder C₁-C₄-Alkyl, und insbesondere für Methyl und n für 0 bis 2, insbesondere für 0 oder 1, speziell für 1.

Ganz besonders bevorzugte mesogene Gruppen weisen folgende Struktur VIII auf:

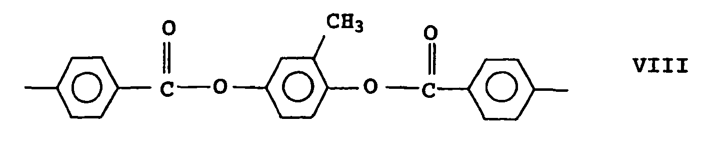

Das chirale polymerisierbare Monomer der Gruppe a) entspricht vorzugsweise der Formel IX

[(Z¹-Y¹)o-A³-Y²-M-Y³]ₙX[Y³-M-Y²-A⁴-(Y¹-Z¹)ₚ]ₘ (IX)

wobei
Z¹, Y¹, Y², Y³ und M wie oben definiert sind,
o, p für 0 oder 1 stehen, wobei o und p nicht gleichzeitig für 0 stehen dürfen,
- A³ und A⁴: gleich oder verschieden sind und
- A³: wie A¹ definiert ist, wenn o=1 ist oder
für eine lineare C₂-C₃₀-Alkylengruppe, vorzugsweise C₂-C₁₂-Alkylengruppe steht, die durch Sauerstoff, Schwefel, gegebenenfalls einfach substituiertem Stickstoff unterbrochen sein kann, wobei diese unterbrechenden Gruppen nicht benachbart sein dürfen; wobei geeignete Aminsubstituenten C₁-C₄-Alkylgruppen umfassen, wobei die Alkylgruppen durch Fluor, Chlor, Brom, Cyan, Methyl oder Ethyl substituiert sein können und wobei A³ besonders bevorzugt für CH₃-(-CH₂)₁-Gruppen mit 1 = 1 bis 7 steht, wenn o=0 ist;
- A⁴: wie A¹ definiert ist, wenn p=1 ist bzw.
für eine lineare C₂-C₃₀-Alkylgruppe, vorzugsweise C₂-C₁₂-Alkylgruppe, die durch Sauerstoff, Schwefel, gegebenenfalls einfach substituiertem Stickstoff unterbrochen sein kann, wobei diese unterbrechenden Gruppen nicht benachbart sein dürfen; wobei geeignete Aminsubstituenten C₁-C₄-Alkylgruppen umfassen, wobei die Alkylgruppen durch Fluor, Chlor, Brom, Cyan, Methyl oder Ethyl substituiert sein können und wobei A³ besonders bevorzugt für CH₃(̵CH₂)₁-Gruppen mit 1 = 1 bis 7 steht, wenn p=0 ist;
- n, m: für 0, 1 oder 2 stehen, wobei die Summe n+m gleich 1 oder 2, vorzugsweise 2, ist; und
- X: für einen chiralen Rest steht.

Von den chiralen Resten X der Verbindungen der allgemeinen Formel IX sind unter anderem aufgrund der leichteren Verfügbarkeit insbesondere solche bevorzugt, die sich von Zuckern, Dinaphthyl- oder Diphenylderivaten sowie optisch aktiven Glykolen, Alkoholen oder Aminosäuren ableiten. Bei den Zuckern sind insbesondere Pentosen und Hexosen und davon abgeleitete Derivate zu nennen.

Beispiele für Reste X sind die folgenden Strukturen, wobei die endständigen Striche jeweils die freien Valenzen bedeuten. 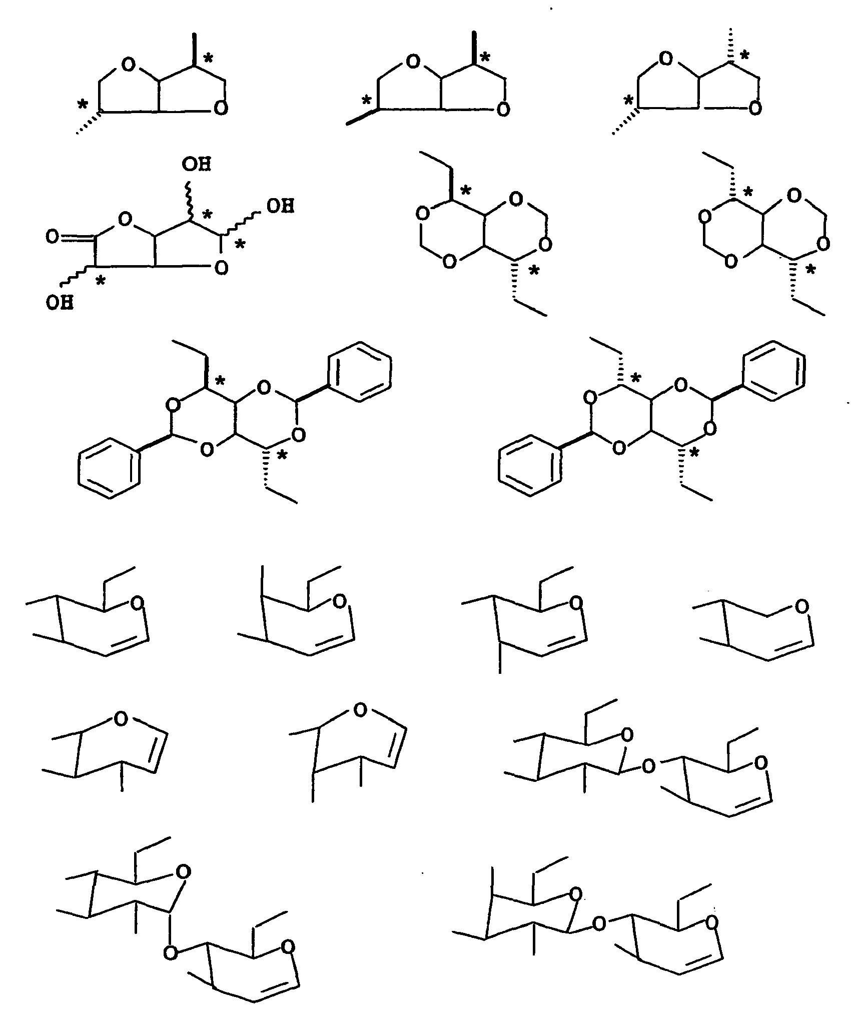 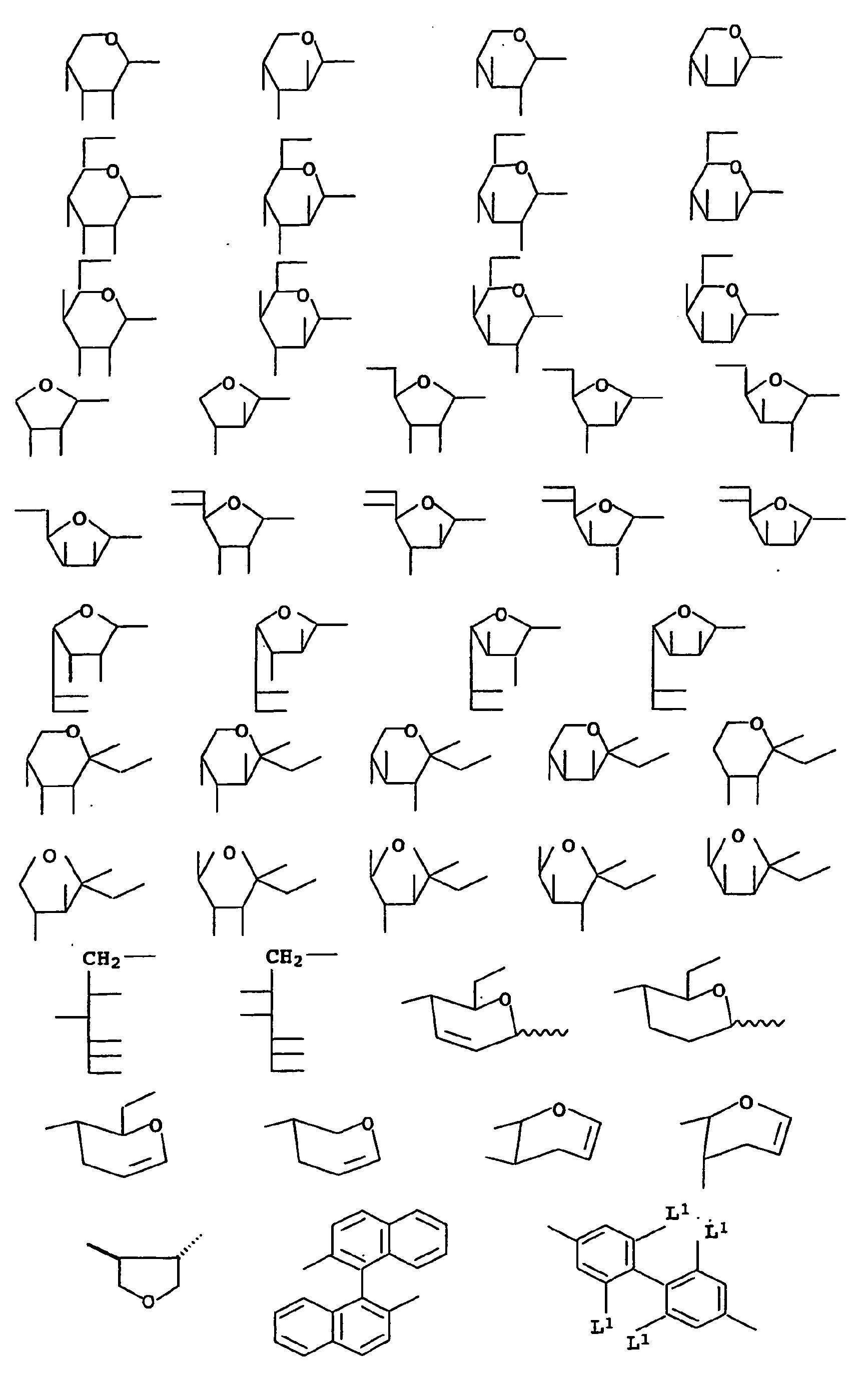 wobei
- L¹: C₁-C₄-Alkyl, C₁-C₄-Alkoxy, Halogen, COOR⁵, OCOR⁵, NHCOR⁵ ist und R⁵ für C₁-C₄-Alkyl oder Wasserstoff steht.

Besonders bevorzugt sind

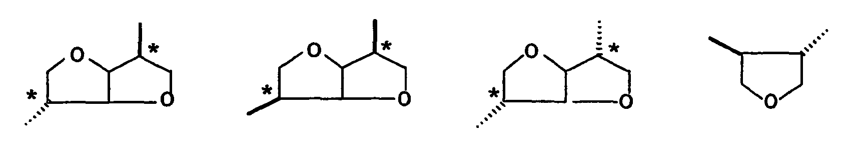

Weiterhin sind auch chirale Gruppen geeignet, die folgende Strukturen aufweisen:

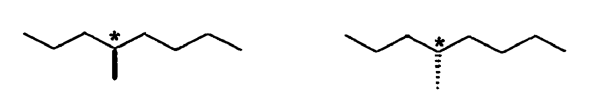

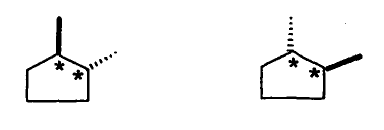

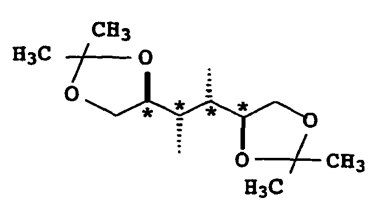

In obiger Definition für die Gruppen A¹, A², A³, A⁴, R³, R⁴, R⁵ und L¹ stehen C₁-C₂₀-Alkyl insbesondere für Methyl, Ethyl, n-Propyl, Isopropyl, n-Butyl, sec-Butyl, Isobutyl, tert.-Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl;
C₁-C₄-Alkyl steht insbesondere für Methyl, Ethyl, n-Propyl, Isopropyl, n-Butyl, sec-Butyl, Isobutyl oder tert-Butyl;
C₁-C₂₀-Alkoxy steht insbesondere für Alkoxygruppen, deren Alkylrest den oben genannten C₁-C₂₀-Alkylgruppen entspricht; und C₂-C₃₀-Alkylen steht insbesondere für Alkylengruppen, die dem zweiwertigen Rest der oben genannten C₂-C₂₀-Alkylgruppen entsprechen, sowie für die linearen C₂₁-C₃₀-Homologe.

In einer besonderen Ausführungsform weist das nematische achirale polymerisierbare Monomer folgende Strukturformel X auf

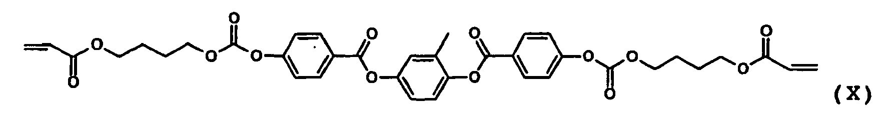

In einer weiteren besonderen Ausführungsform weist das chirale polymerisierbare Monomer folgende Strukturformel XI oder XII auf 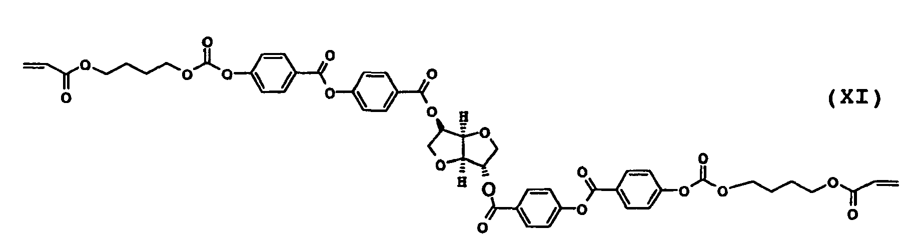 und/oder

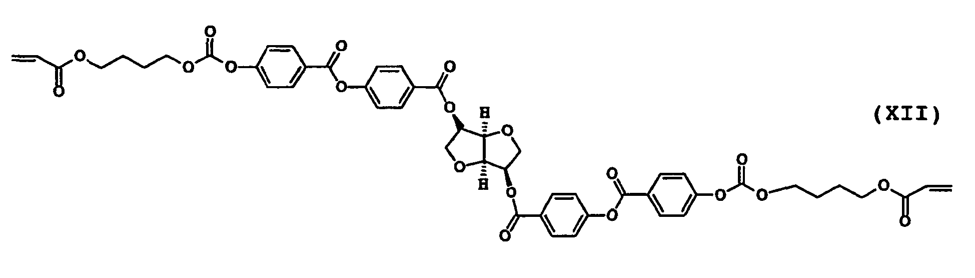

Das Mengenverhältnis von achiralem nematischem Monomer zu chiralem Monomer wird so gewählt, dass das aus diesen Monomeren entstehende Polymerisat nach der Orientierung eine Ganghöhe der helikalen Überstruktur aufweist, die einer Wellenlänge im IR-Spektralbereich entspricht. Dabei hängt das Mengenverhältnis von der Art der nematischen und chiralen Monomeren ab und muss von Einzelfall zu Einzelfall bestimmt werden.

Alternativ kann als Komponente B wenigstens ein cholesterisches polymerisierbares Monomer der Gruppe b) verwendet werden.

Bevorzugte Monomere der Gruppe b) sind in der DE-A 19602848 beschrieben, auf die hiermit in vollem Umfang Bezug genommen wird. Insbesondere umfassen die Monomere b) mindestens ein cholesterisches polymerisierbares Monomer der Formel XIII

(Z¹-Y¹-A¹-Y²-M¹-Y³)ₙX (XIII)

Die Variablen sind dabei wie bei den Monomeren der Gruppe a) definiert. Die bevorzugten Ausgestaltungen gelten entsprechend.

Alternativ kann als Komponente B wenigstens ein cholesterisches vernetzbares Polymer der Gruppe c) verwendet werden.

Bevorzugte Polymere der Gruppe c) sind cholesterische Cellulosederivate, wie sie in der DE-A-197 136 38 beschrieben werden, insbesondere cholesterische Mischester von
(1) Hydroxyalkylethern der Cellulose mit
(2) gesättigten, aliphatischen oder aromatischen Carbonsäuren und
(3) ungesättigten Mono- oder Dicarbonsäuren.

Besonders bevorzugt sind Mischester, bei denen die über Etherfunktionen gebundenen Hydroxyalkylreste der Komponente (1) geradkettige oder verzweigte C₂-C₁₀-Hydroxyalkylreste, insbesondere Hydroxypropyl- und/oder Hydroxyethylreste umfassen. Die Komponente (1) der einsetzbaren Mischester weist vorzugsweise ein Molekulargewicht von etwa 500 bis etwa 1 Million auf. Bevorzugtermaßen sind die Anhydroglukose-Einheiten der Cellulose mit einem durchschnittlichen molaren Substitutionsgrad von 2 bis 4 mit Hydroxyalkylresten verethert. Die Hydroxyalkylgruppen in der Cellulose können gleich oder verschieden sein. Bis zu 50 % davon können auch durch Alkylgruppen (insbesondere C₁-C₁₀-Alkylgruppen) ersetzt werden. Ein Beispiel hierfür ist die Hydroxypropylmethylcellulose.

Als Komponente (2) der einsetzbaren Mischester sind geradkettige aliphatische C₁-C₁₀-Carbonsäuren, insbesondere C₂-C₆-Carbonsäuren, verzweigte aliphatische C₄-C₁₀-Carbonsäuren, insbesondere C₄-C₆-Carbonsäuren oder geradkettige oder verzweigte Halogencarbonsäuren brauchbar. Die Komponente (2) kann auch Benzoesäure oder aromatisch substituierte aliphatische Carbonsäuren, insbesondere Phenylessigsäure sein. Besonders bevorzugt ist die Komponente (2) ausgewählt unter Essigsäure, Propionsäure, n-Buttersäure, Isobuttersäure oder n-Valeriansäure, insbesondere unter Propionsäure, 3-Cl-Propionsäure, n-Buttersäure oder Isobuttersäure.

Vorzugsweise ist die Komponente (3) ausgewählt unter ungesättigten C₃-C₁₂-Mono- oder Dicarbonsäuren oder Halbestern einer derartigen Dicarbonsäure, insbesondere α,β-ethylenisch ungesättigten C₃-C₆-Mono- oder Dicarbonsäuren oder Halbestern der Dicarbonsäuren.

Die Komponente (3) der einsetzbaren Mischester ist besonders bevorzugt ausgewählt unter Acrylsäure, Methacrylsäure, Crotonsäure, Vinylessigsäure, Maleinsäure, Fumarsäure oder Undecensäure, insbesondere unter Acrylsäure oder Methacrylsäure.

Vorzugsweise ist die Komponente (1) mit einem durchschnittlichen molaren Substitutionsgrad von 1,5 bis 3, insbesondere von 1,6 bis 2,7, besonders bevorzugt von 2,3 bis 2,6 mit der Komponente (2) und (3) verestert. Vorzugsweise sind etwa 1 bis 30 %, insbesondere 1 bis 20 % oder 1 bis 10 %, besonders bevorzugt etwa 5 bis 7 % der OH-Gruppen der Komponente (1) mit der Komponente (3) verestert.

Das Mengenverhältnis der Komponente (2) zu Komponente (3) bestimmt die Reflexionswellenlänge des Polymers.

Gut geeignete Polymere der Gruppe c) sind außerdem die in der DE-A-197 17 371 beschriebenen, propargylterminierten, cholesterischen Polyester oder Polycarbonate.

Bevorzugt unter diesen Verbindungen sind Polyester oder Polycarbonate mit wenigstens einer Propargylendgruppe der Formel R⁶C≡C-CH₂-, worin R⁶ für H, C₁-C₄-Alkyl, Aryl oder Ar-C₁-C₄-alkyl (z. B. Benzyl oder Phenethyl) steht, die direkt oder über ein Bindeglied an die Polyester oder Polycarbonate gebunden ist. Das Bindeglied ist vorzugsweise ausgewählt unter
-O-, -S-, -NR⁷-, 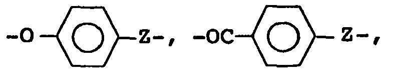 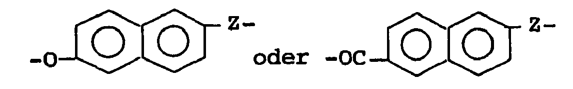 (die Propargylgruppe ist an Z gebunden),
worin R⁷ für H, C₁-C₄-Alkyl oder Phenyl steht, Z für O, S oder NR⁸ steht, und R⁸ für H, C₁-C₄-Alkyl oder Phenyl steht.

Vorzugsweise ist in den Polyestern die Propargylendgruppe über
-O-, 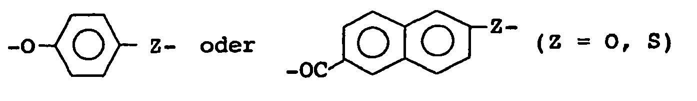 gebunden.

Die Polyester enthalten vorzugsweise
(4) mindestens eine aromatische oder araliphatische Dicarbonsäureeinheit und/oder mindestens eine aromatische oder araliphatische Hydroxycarbonsäureeinheit und
(5) mindestens eine Dioleinheit.

Bevorzugte Dicarbonsäureeinheiten sind solche der Formel 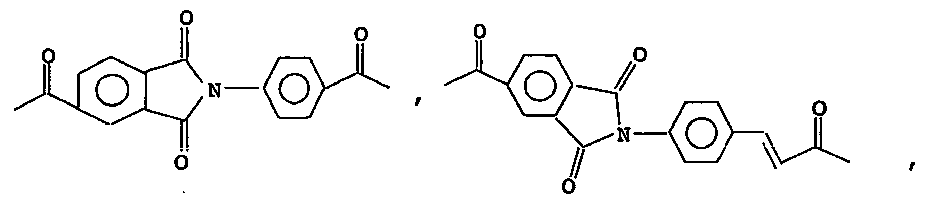 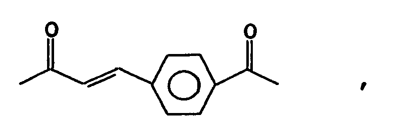 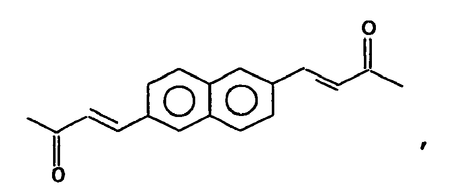 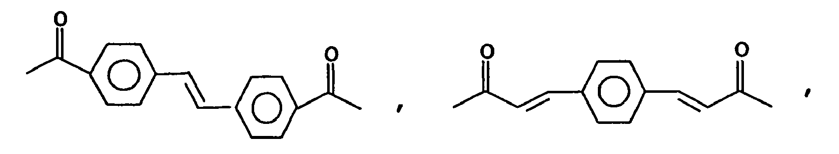 insbesondere solche der Formel 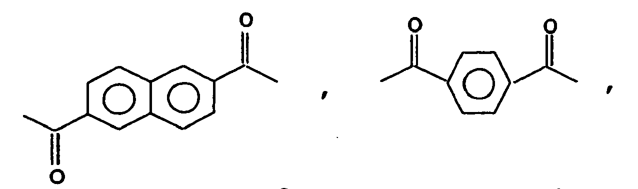 oder 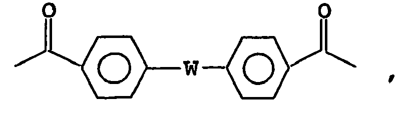 wobei jede der Phenylgruppen bzw. die Naphthylgruppe 1, 2 oder 3 Substituenten aufweisen kann, die unabhängig voneinander ausgewählt sind unter C₁-C₄-Alkyl, C₁-C₄-Alkoxy, Halogen oder Phenyl, wobei in den obigen Formeln
- W: für NR⁹, S, O, (CH₂)ᵣO(CH₂)_{q}, (CH₂)ₛ oder eine Einfachbindung steht,
- R⁹: Alkyl oder Wasserstoff bedeutet,
- s: eine ganze Zahl von 1 bis 15 bedeutet, und
- r und q: unabhängig voneinander für ganze Zahlen von 0 bis 10 stehen.

Bevorzugte Hydroxycarbonsäureeinheiten sind solche der Formel 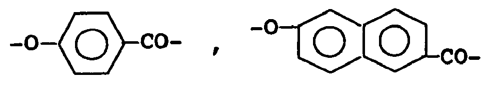 und 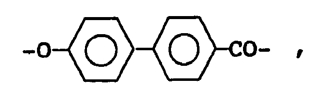 wobei jede Phenylgruppe oder die Naphthylgruppe 1, 2 oder 3 Substituenten aufweisen kann, die unabhängig voneinander ausgewählt sind unter C₁-C₄-Alkyl, C₁-C₄-Alkoxy, Halogen oder Phenyl.

Bevorzugte Dioleinheiten sind solche der Formel 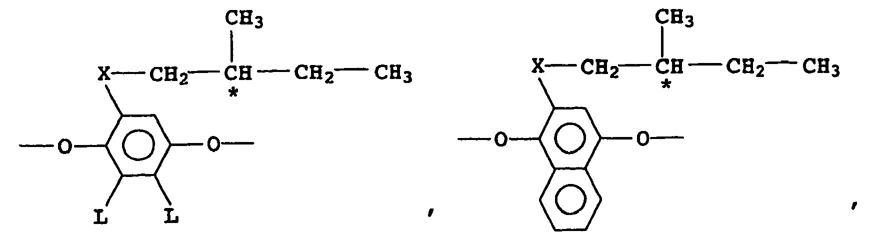 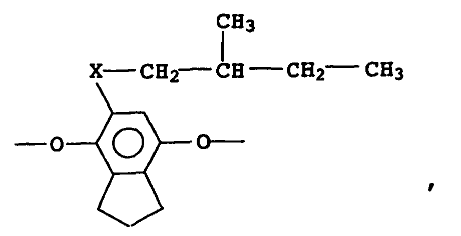 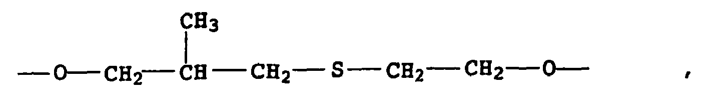 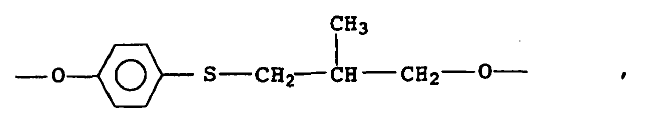 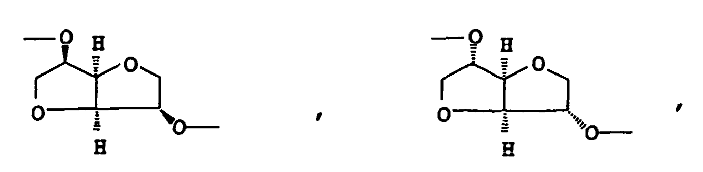 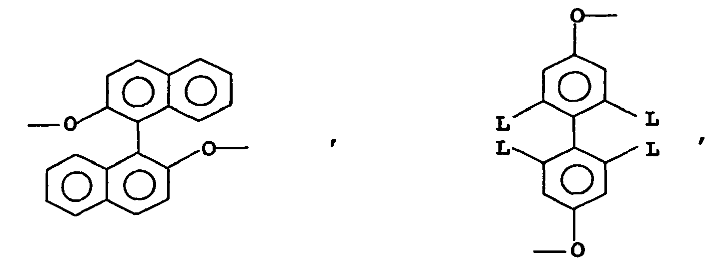 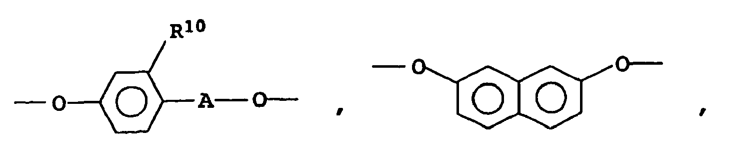 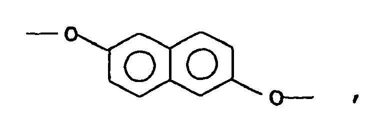 -O-(CH₂)ₙ-O-,
insbesondere solche der Formel 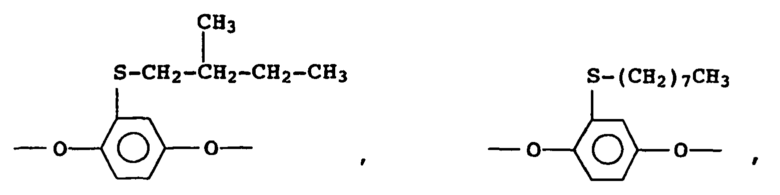 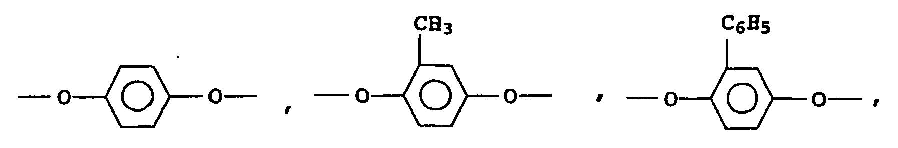 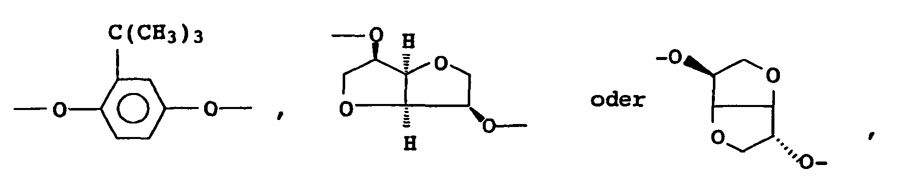 wobei in den obigen Formeln
- L: für Alkyl, Alkoxy, Halogen, COOR¹¹, OCOR¹¹, CONHR¹¹ oder NHCOR¹¹ steht,
- X: für S, O, N, CH₂ oder eine Einfachbindung steht,
- A: eine Einfachbindung, (CH₂)ₙ, O(CH₂)ₙ, S(CH₂)ₙ, NR¹¹(CH₂)ₙ, 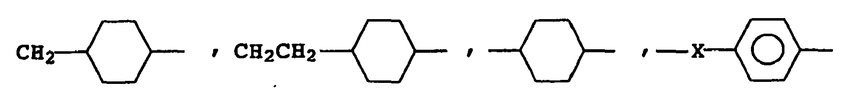
oder 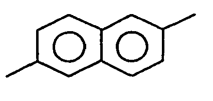 bedeutet,
- R¹¹: Alkyl oder Wasserstoff bedeutet,
- R¹⁰: Wasserstoff, Halogen, Alkyl oder Phenyl bedeutet und
- n: eine ganze Zahl von 1 bis 15 bedeutet.

Bevorzugt sind Polyester, die mindestens eine Dicarbonsäureeinheit der Formel 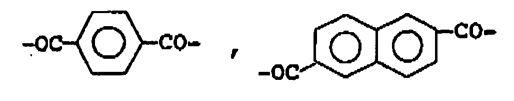 oder 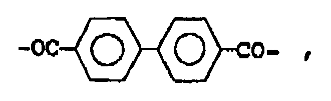 und mindestens eine Dioleinheit der Formel 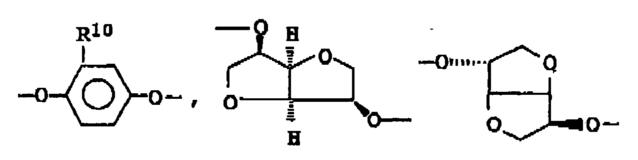 wobei R¹⁰ für H, Halogen, C₁-C₄-Alkyl, insbesondere CH₃ oder C(CH₃)₃, oder Phenyl steht, enthalten.

Weitere bevorzugte Verbindungen sind Diester der Formel P-Y-B-CO-O-A-O-CO-B-Y-P, worin P für eine Propargylendgruppe der oben definierten Formel steht, Y für O, S oder NR¹² (R¹² = C₁-C₄-Alkyl) steht, B für 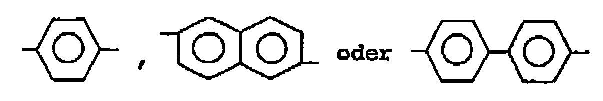 steht, wobei
jede Phenylgruppe oder die Naphthylgruppe 1, 2 oder 3 Substituenten aufweisen kann, die unabhängig voneinander ausgewählt sind unter C₁-C₄-Alkyl, C₂-C₄-Alkoxy, Halogen oder Phenyl, und A (zusammen mit den benachbarten Sauerstoffatomen) für eine der oben genannten Dioleinheiten steht.

Besonders bevorzugte Diester sind solche der oben genannten Formel, in der B für 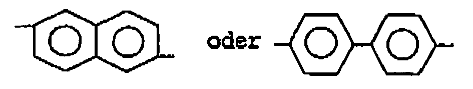 steht, und
insbesondere Diester der Formel
HC≡CCH₂O-B-CO-O-A-O-CO-B-OCH₂-C≡CH, worin
(6) B für 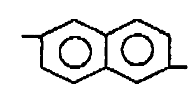 und
   A für 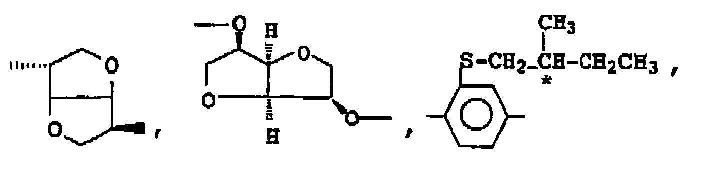 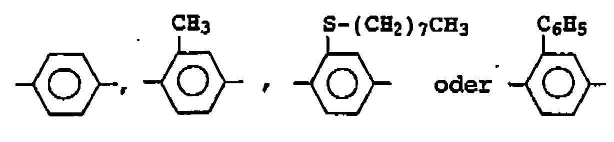 steht, oder
(7) B für 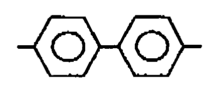 steht, und
   A die unter (6) genannten Bedeutungen besitzt.

Weitere bevorzugte Verbindungen sind Polycarbonate, die mindestens eine Dioleinheit der oben genannten Formeln, insbesondere der Formeln 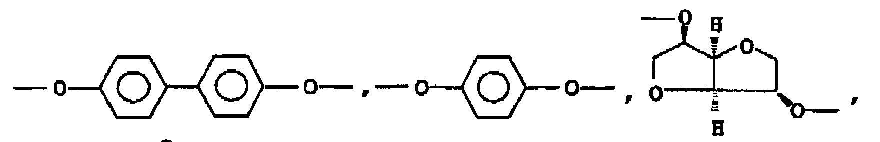 oder 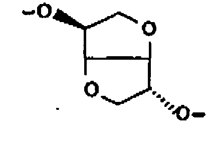 eingebaut enthalten.

Bevorzugte Polycarbonate sind dabei solche, die als Dioleinheiten mindestens eine mesogene Einheit der Formel 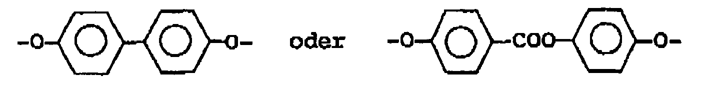 und
mindestens eine chiralen Einheit der Formel 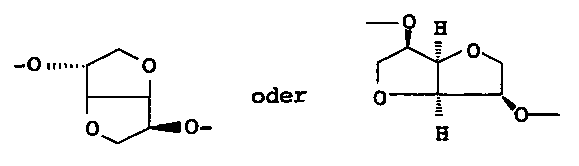 und gegebenenfalls eine nicht-chirale Einheit der Formel 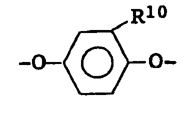 enthalten, wobei R¹⁰ die oben angegebenen Bedeutungen besitzt und insbesondere für H oder CH₃ steht.

Besonders bevorzugte Polycarbonate sind solche mit Propargylendgruppen der Formel HC≡CCH₂O-R¹³-CO, worin R¹³ für 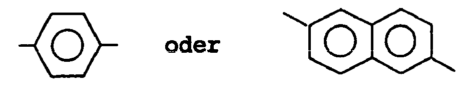 steht.

Als Polymere der Gruppe c) sind außerdem cholesterische Polycarbonate, die auch an nicht-terminaler Position photoreaktive Gruppen enthalten, geeignet. Solche Polycarbonate werden in der DE-A-196 31 658 beschrieben. Sie entsprechen vorzugsweise der Formel XIV 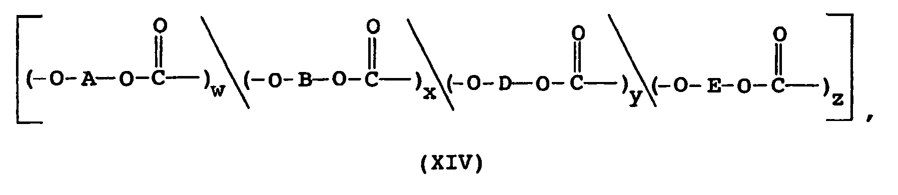 wobei das Molverhältnis w/x/y/z etwa 1 bis 20/etwa 1 bis 5/etwa 0 bis 10/etwa 0 bis 10 beträgt. Besonders bevorzugt ist ein Molverhältnis w/x/y/z von etwa 1 bis 5/etwa 1 bis 2/etwa 0 bis 5/etwa 0 bis 5.

In der Formel XIV steht
- A: für eine mesogene Gruppe der Formel 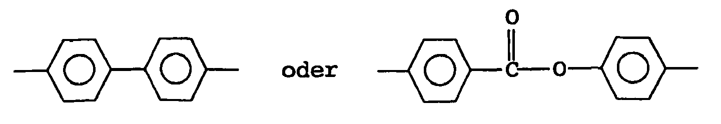
- B: für eine chirale Gruppe der Formel 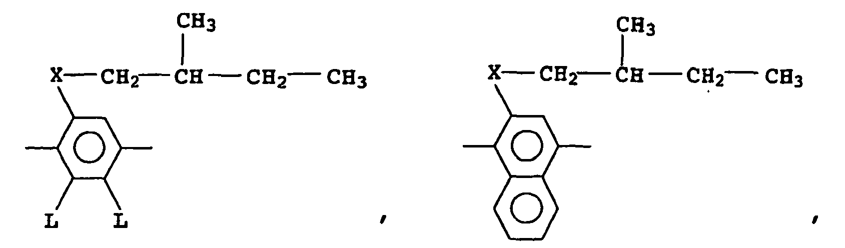 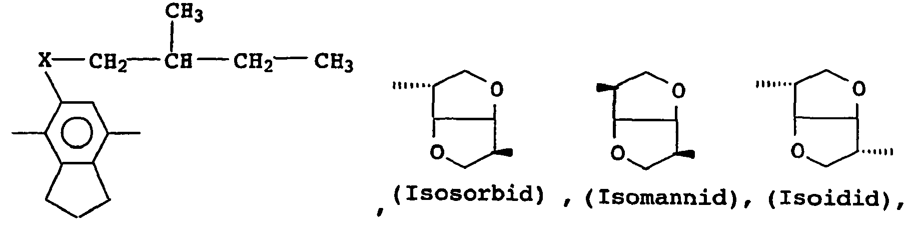 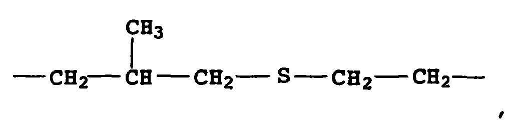 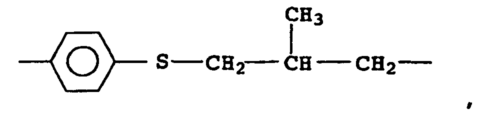 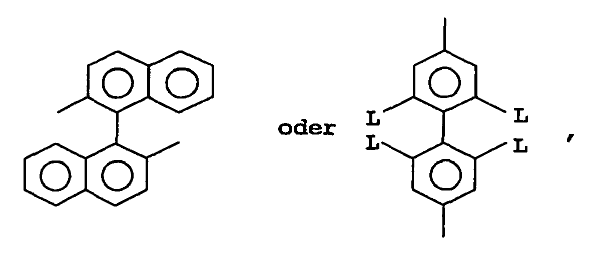
- D: für eine photoreaktive Gruppe der Formel 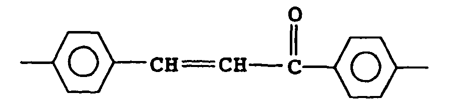 oder 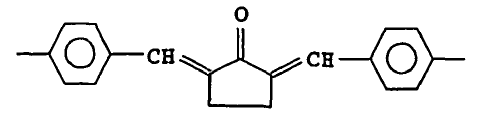
und
- E: für eine weitere, nicht-chirale Gruppe der Formel 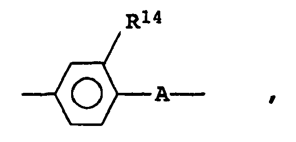
wobei in den obigen Formeln
- L: für Alkyl, Alkoxy, Halogen, COOR¹⁵, OCOR¹⁵, CONHR¹⁵ oder NHCOR¹⁵ steht,
- X: für S, O, N, CH₂ oder eine Einfachbindung steht,
- R¹⁵: für Alkyl oder Wasserstoff steht,
- A: eine Einfachbindung, (CH₂)ₙ, O(CH₂)ₙ, S(CH₂)ₙ, NR(CH₂)ₙ, 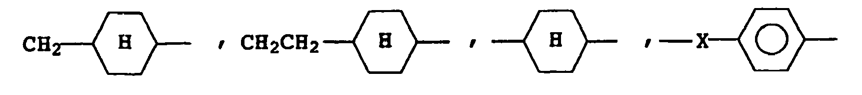 oder 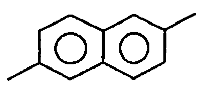 bedeutet,
- R¹⁴: Wasserstoff, Halogen, Alkyl oder Phenyl bedeutet und
- n: eine ganze Zahl von 1 bis 15 bedeutet.

Wenn R¹⁴ für Alkyl, Halogen und A für eine Einfachbindung stehen oder wenn R¹⁴ für H oder Alkyl und A für 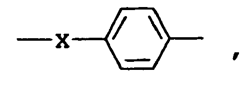 -O(CH₂)ₙ-, -S(CH₂)ₙ oder -NR¹⁵(CH₂)ₙ
steht, handelt es sich um löslichkeitsverbessernde Gruppen. Beispiele hierfür sind 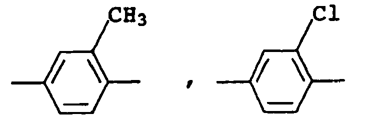 oder 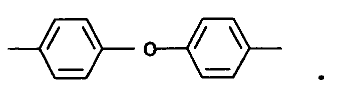 Isosorbid, Isomannid und/oder Isoidid ist die bevorzugte chirale Komponente.

Der Anteil der chiralen Diolstruktureinheiten liegt bevorzugt im Bereich von 1 bis 80 mol-% des Gesamtgehaltes an Diolstruktureinheiten, besonders bevorzugt 2 bis 20 mol-%, je nach gewünschtem Reflexionsverhalten.

Alternativ kann als Komponente B ein cholesterisches Polymer in einem polymerisierbaren Verdünnungsmittel (Gruppe d)) verwendet werden.

Bevorzugte Polymere der Gruppe d) sind beispielsweise vernetzbare, cholesterische Copolyisocyanate, wie sie in der US-A-08 834 745 beschrieben werden, auf die hiermit in vollem Umfang Bezug genommen wird. Solche Copolyisocyanate weisen wiederkehrende Einheiten der Formeln 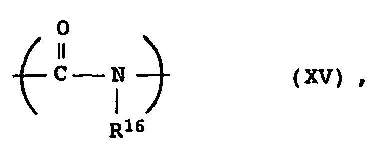 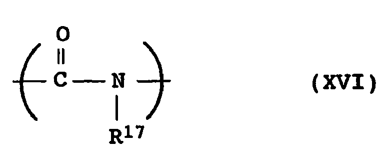 und gegebenenfalls der Formel 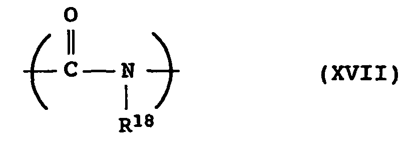 worin
- R¹⁶: für einen chiralen aliphatischen oder aromatischen Rest steht,
- R¹⁷: für einen vernetzbaren Rest steht und
- R¹⁸: für einen achiralen Rest steht.

Soweit nicht anders angegeben, ist hier unter "Alkyl" (auch in Bedeutungen wie Alkoxy, Dialkyl, Alkylthio etc.) ein verzweigtes und unverzweigtes C₁-C₁₂-Alkyl, vorzugsweise C₃-C₁₂-, besonders bevorzugt C₄-C₁₀-, insbesondere C₆-C₁₀-Alkyl zu verstehen.

Vorzugsweise ist R¹⁶ ausgewählt unter (chiralen) verzweigten oder unverzweigten Alkyl-, Alkoxyalkyl-, Alkylthioalkyl-, Cycloalkyl-, Alkylphenyl- oder C₃-C₉-Epoxyalkylresten oder Resten von Estern von C₁-C₆-Fettsäuren mit C₁-C₆-Alkanolen oder C₃-C₉-Dialkylketonen. Der Esterrest kann sowohl über den Fettsäureanteil als auch über den Alkanolrest an das N-Atom gebunden sein. Der Rest R¹⁶ kann 1, 2 oder 3 Substituenten aufweisen, die gleich oder verschieden und ausgewählt sind unter Alkoxygruppen, Di-C₁-C₄-alkylaminogruppen, CN, Halogenatomen oder C₁-C₄-Alkylthiogruppen.

Vorzugsweise ist R¹⁶ ausgewählt unter Alkyl, Alkoxyalkyl, Resten von Estern von C₁-C₆-Fettsäuren mit C₁-C₆-Alkanolen, C₃-C₉-Dialkylketonen und epoxidierten C₃-C₉-Epoxyalkylresten, wobei R¹⁶ durch 1 oder 2 Reste substituiert sein kann, die gleich oder verschieden und ausgewählt sind unter Alkoxy, Halogen, CN oder CF₃. Bevorzugte Substituenten für verzweigte oder unverzweigte Alkyl- oder Alkoxyreste sind ausgewählt unter Alkoxygruppen, Halogenatomen oder CN; für Ester von C₁-C₆-Fettsäuren mit C₁-C₆-Alkanolen unter Alkoxygruppen, Halogenatomen, CN oder CF₃ und für C₃-C₉-Dialkylketone unter Alkoxygruppen, Halogenatomen oder CN.

Insbesondere weist die Hauptkette des Restes R¹⁶ eine Länge von 3 bis 12, insbesondere 6 bis 10, vorzugsweise 6 bis 8 Gliedern (C-, O- und/oder S-Atome) auf. Besonders bevorzugt sind Reste R¹⁶, die ausgewählt sind unter 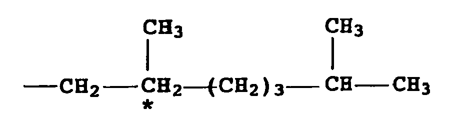 2,6-Dimethylheptyl 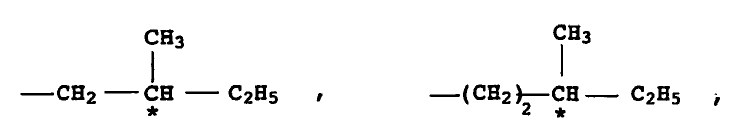 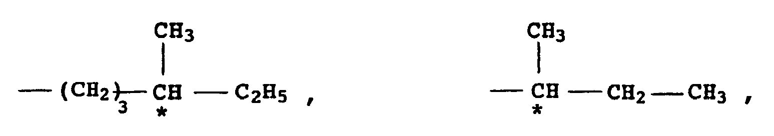 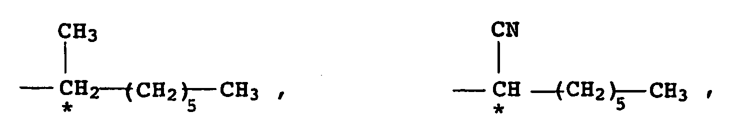 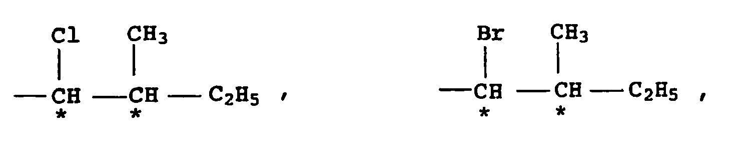 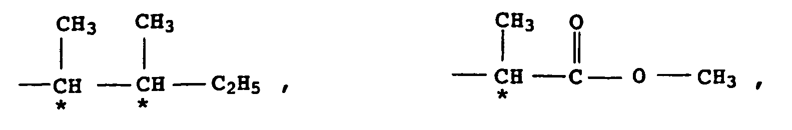 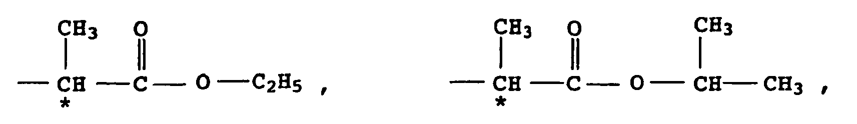 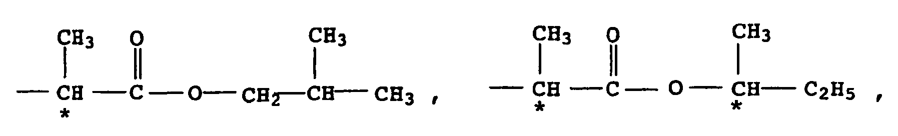 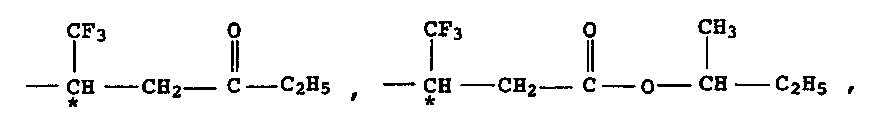 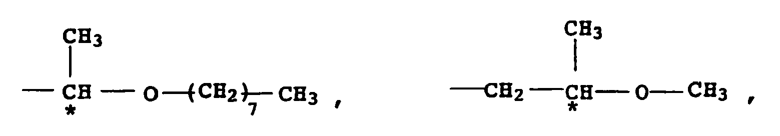 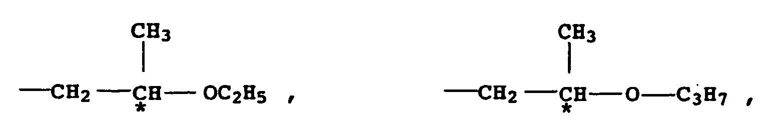 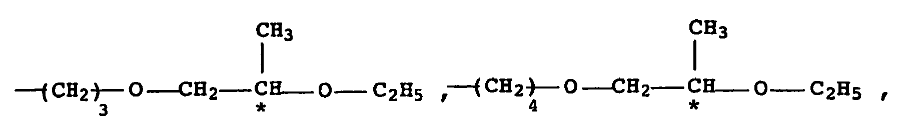 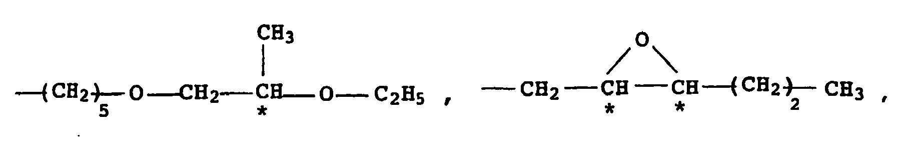 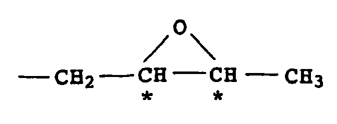 und 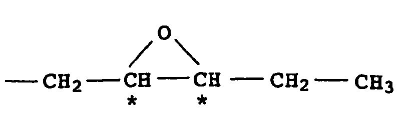 Ganz besonders bevorzugt ist die Komponente XV der einsetzbaren Copolyisocyanate von 2,6-Dimethylheptylisocyanat abgeleitet.

Der Rest R¹⁷ der einsetzbaren Copolyisocyanate ist vorzugsweise ausgewählt unter C₃-C₁₁-Alkenylresten, C₄-C₁₁-Vinyletherresten (= Vinyl-C₂-C₉-Alkylethern), ethylenisch ungesättigten C₃-C₁₁-Carbonsäureresten und Estern von ethylenisch ungesättigten C₃-C₆-Monocarbonsäuren mit C₂-C₆-Alkanolen, wobei die Bindung an das N-Atom über den Alkanolrest des Esters erfolgt. Besonders bevorzugt ist der Rest ausgewählt unter Methylacrylat, Ethylacrylat, Propylacrylat, n-Butylacrylat, Isobutylacrylat, 2-Ethylhexylacrylat, Methylmethacrylat, Ethylmethacrylat, Propylmethacrylat, n-Butylmethacrylat, Isobutylmethacrylat, 2-Ethylhexylmethacrylat, insbesondere unter Ethylacrylat oder Ethylmethacrylat.

Der Rest R¹⁸ besitzt vorzugsweise die gleichen Bedeutungen wie der Rest R¹⁶. Er ist aber achiral, d. h. er weist kein Chiralitätszentrum auf oder liegt als racemisches Gemisch vor.

Besonders bevorzugt weist die Hauptkette des Restes R¹⁸ eine Länge von 4 bis 12, insbesondere 6 bis 10, vorzugsweise 6 bis 8 Gliedern (C-, O- und/oder S-Atome) auf. Ganz besonders bevorzugt ist die Komponente XVII der erfindungsgemäßen Copolyisocyanate von n-Hexylisocyanat, n-Heptylisocyanat oder n-Octylisocyanat abgeleitet.

Die Komponenten XV, XVI und XVII sind vorzugsweise im Molmengenverhältnis XV:XVI:XVII von etwa 1 bis 20 : 1 bis 20 : 50 bis 98, insbesondere etwa 5 bis 15 : 5 bis 15 : 65 bis 90, besonders bevorzugtermaßen etwa 15:10:75 vorhanden.

Die Einheiten XV, XVI und XVII können in den einsetzbaren Copolyisocyanaten statistisch verteilt sein.

Bevorzugt wird als Komponente B der erfindungsgemäßen Zusammensetzung ein Gemisch aus wenigstens einem achiralen nematischen polymerisierbaren Monomer und einem chiralen polymerisierbaren Monomer, d. h. Gruppe a), verwendet.

Die Verbindung bzw. die Summe der Verbindungen A liegt vorzugsweise in einer Menge von 0,01 bis 20 Gew.-%, besonders bevorzugt von 0,01 bis 15 Gew.-%, ganz besonders bevorzugt 0,01 bis 10 Gew.-%, insbesondere von 0,01 bis 7 Gew.-% und speziell 0,01 bis 5 Gew.-%, bezogen auf das Gesamtgewicht der Komponente B, vor.

Die Zusammensetzung ist vorzugsweise entweder ein inniges Gemisch der Komponenten A und B oder eine Lösung oder Dispersion der Komponenten A und B in einem geeigneten Verdünnungsmittel. Dabei beträgt der Anteil an Verdünnungsmittel vorzugsweise 5 bis 95 Gew.-%, besonders bevorzugt 30 bis 80 Gew.-%, insbesondere 40 bis 70 Gew.-%, bezogen auf das Gesamtgewicht der Zusammensetzung.

Geeignete Verdünnungsmittel sind für die Verbindungen der Gruppen a) oder b) lineare oder verzweigte Ester, besonders Essigsäurester, cyclische Ether und Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK).

Geeignete Verdünnungsmittel für die Polymere der Gruppe c) sind beispielsweise Ether und cyclische Ether wie Tetrahydrofuran oder Dioxan, chlorierte Kohlenwasserstoffe, wie Dichlormethan, Trichlormethan, Tetrachlorkohlenstoff, Dichlorethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet. Geeignete Verdünnungsmittel für Cellulosederivate sind beispielsweise Ether, wie Dioxan, oder Ketone, wie Aceton. Werden Copolyisocyanate als Polymere der Gruppe d) eingesetzt, ist es sinnvoll, polymerisierbare Verdünnungsmittel, wie in der US-A-08 834 745 beschrieben, zu verwenden. Solche polymerisierbaren Verdünnungsmittel sind beispielsweise
- Ester α,β-ungesättigter Mono- oder Dicarbonsäuren, insbesondere C₃-C₆-Mono- oder Dicarbonsäuren, mit C₁-C₁₂-Alkanolen, C₂-C₁₂-Alkandiolen oder deren C₁-C₆-Alkylether und Phenylether, beispielsweise Acrylate und Methacrylate, Hydroxyethyl- oder Hydroxypropylacrylat oder -methacrylat sowie 2-Ethoxyethylacrylat oder -methacrylat;
- Vinyl-C₁-C₁₂-alkylether, wie Vinylethyl-, Vinylhexyl- oder Vinyloctylether;
- Vinylester von C₁-C₁₂-Carbonsäuren, wie Vinylacetat, Vinylpropionat, Vinyllaurat;
- C₃-C₉-Epoxide, wie 1,2-Butylenoxid, Styroloxid;
- N-Vinylpyrrolidon, N-Vinylcaprolactam, N-Vinylformamid;
- vinylaromatische Verbindungen, wie Styrol, α-Methylstyrol, Chlorstyrol, und
- Verbindungen mit zwei oder mehreren vernetzbaren Gruppen, wie Diester von Diolen (einschließlich Polyethylenglykole) mit Acryl- oder Methacrylsäure oder Divinylbenzol.

Beispiele für bevorzugte polymerisierbare Verdünnungsmittel sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonomethyletheracrylat, Phenoxyethylacrylat und Tetraethylenglykoldimethacrylat. Ein besonders bevorzugtes polymerisierbares Verdünnungsmittel ist Styrol.

Auch die Gemische der Gruppen a), b) oder c) können in kleinen Mengen polymerisierbare Verdünnungsmittel enthalten. Bevorzugte, a), b) oder c) zusetzbare, polymerisierbare Lösungsmittel sind Acrylate, insbesondere höherfunktionelle Acrylate wie Bis, Tris- oder Tetraacrylate, besonders bevorzugt hochsiedende Oligoacrylate. Die bevorzugte Zusatmenge liegt bei etwa 5 Gew.-%, bezogen auf das Gesamtgewicht des Gemischs.

Die erfindungsgemäße Zusammensetzung kann zur Einstellung der Viskosität und des Verlaufverhaltens mit zusätzlichen Komponenten vermischt werden.

Einsetzbar sind beispielsweise polymere Bindemittel und/oder monomere Verbindungen, die durch Polymerisation in ein polymeres Bindemittel überführt werden können. Als solche Mittel eignen sich z. B. in organischen Lösungsmitteln lösliche Polyester, Celluloseester, Polyurethane, Silikone, polyether- oder polyestermodifizierte Silikone. Besonders bevorzugt werden Celluloseester wie Celluloseacetobutyrat eingesetzt.

Auch die Zugabe geringer Mengen geeigneter Verlaufsmittel kann vorteilhaft sein. Einsetzbar sind etwa 0,005 bis 1 Gew.-%, insbesondere 0,01 bis 0,5 Gew.-%, bezogen auf die Menge an eingesetztem Cholester. Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Gegebenenfalls enthält die Zusammensetzung auch Stabilisatoren gegen UV- und Witterungseinflüsse. Hierfür eignen sich zum Beispiel Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-s-triazine oder sterisch gehinderte Amine. Diese Stoffe können allein oder vorzugsweise in Form von Gemischen eingesetzt werden.

Weiterhin kann die erfindungsgemäße Zusammensetzung, wenn sie photochemisch polymerisiert werden soll, handelsübliche Photoinitiatoren enthalten. Für eine Härtung durch Elektronenstrahlen sind solche nicht notwendig. Geeignete Photoinitiatoren sind beispielsweise Isobutyl-benzoinether, 2,4,6-Trimethylbenzoyldiphenylphosphinoxid, 1-Hydroxycyclohexyl-phenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio]phenyl)-2-(4-morpholinyl)-1-propanon, 2-Hydroxy-2-methyl-1-phenylpropan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,1-Campherchinon, Ethyl-d,l-campherchinon, Mischungen von Benzophenon und 4-Methylbenzophenon, Benzophenon, 4,4'-Bisdimethylamin-benzophenon, (η⁵-Cyclopentadienyl) (η⁶-isopropylphenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die Ausführungsform ist durch Anspruch 5 definiert.

Gegenstand der vorliegenden Erfindung ist auch die Verwendung einer wie zuvor beschriebenen Zusammensetzung zur Herstellung einer Wärmeisolationsbeschichtung.

Ein weiterer Gegenstand der vorliegenden Erfindung ist eine Wärmeisolationsbeschichtung, umfassend wenigstens eine orientierte, gehärtete Schicht der erfindungsgemäßen Zusammensetzung.

Vorzugsweise umfasst die erfindungsgemäße Wärmeisolationsbeschichtung wenigstens ein IR-Strahlung reflektierendes, gehärtetes cholesterisches Polymer, das eine Ganghöhe der helikalen Überstruktur aufweist, die einer Wellenlänge im IR-Spektralbereich entspricht.

Das cholesterische Polymer ist beispielsweise durch Orientierung und Härtung einer wie zuvor beschriebenen Komponente B der Gruppe a), b), c) oder d) erhältlich.

Umfasst die Wärmeisolationsbeschichtung wenigstens zwei Schichten, so weisen die die IR-Strahlung reflektierenden Polymere in den unterschiedlichen Schichten vorzugsweise jeweils unterschiedliche Ganghöhen der helikalen Überstruktur, die Wellenlängen im IR-Spektralbereich entsprechen, und/oder entgegengesetzte Chiralitäten (Händigkeit) auf. Ebenfalls bevorzugt ist es, wenn bei einer wenigstens 2-schichtigen Wärmeisolationsbeschichtung die Ganghöhe der helikalen Überstrukturen von jeweils 2, vorzugsweise benachbarten, Schichten gleich, ihre Chiralität jedoch entgegengesetzt ist. Gleichfalls bevorzugt ist es, wenn bei einer wenigstens 2-schichtigen Wärmeisolationsbeschichtung zwischen zwei Schichten mit helikaler Überstruktur gleicher Ganghöhe und gleicher Chiralität ein Medium vorliegt, das die Drehrichtung des transmittierten zirkular polarisierten Lichtes umkehrt, insbesondere eine sog. λ/2-Folie oder - Platte.

Vorzugsweise umfasst die Wärmeisolationsbeschichtung 1 bis 10 Schichten, besonders bevorzugt 1 bis 4 Schichten und speziell 2 Schichten. Vorzugsweise unterscheiden sich die beiden Schichten entweder in der Ganghöhe der helikalen Überstruktur oder in der Chiralität. Besonders bevorzugt weisen die beiden Schichten die gleiche Ganghöhe der helikalen Überstruktur, jedoch entgegengesetzte Chiralitäten auf.

Ein weiterer Gegenstand der vorliegenden Erfindung ist ein Verfahren zur Herstellung der erfindungsgemäßen Wärmeisolationsbeschichtung, bei dem man eine erfindungsgemäße Zusammensetzung auf ein Substrat aufträgt, gegebenenfalls orientiert und härtet. Die Härtung erfolgt vorzugsweise durch Polymerisation der Monomere der Gruppen a) oder b) oder des Lösungsmittels der Gruppe d) bzw. durch Vernetzung des Polymers der Gruppe c).

Zur Herstellung weiterer Schichten wird den Vorgang des Aufbringens, Orientierens und Härtens wiederholt, wobei dabei vorzugsweise eine von der ersten Zusammensetzung verschiedene erfindungsgemäße Zusammensetzung verwendet wird, so dass die orientierten, durch Polymerisation der Monomere der Gruppe a) oder b) erhältlichen cholesterischen Polymere bzw. die orientierten cholesterischen Polymere der Gruppe c) oder d) in unterschiedlichen Schichten eine andere Ganghöhe der helikalen Überstruktur und/ oder eine entgegengesetzte Chiralität aufweisen als diejenigen der ersten Schicht. Alternativ oder ergänzend kann zwischen zwei Schichten mit helikaler Überstruktur gleicher Ganghöhe und gleicher Chiralität ein Medium eingebaut werden, das die Drehrichtung des transmittierten zirkular polarisierten Lichtes umkehrt, insbesondere eine sog. λ/2-Folie oder - Platte.

Die zuvor gemachten Ausführungen zu den bevorzugten Zusammensetzungen und wärmeisolationsbeschichtungen gelten hier entsprechend.

Das Substrat ist vorzugsweise transparent. Das transparente Substrat kann beispielsweise ein Glasbaustein, eine Fensterscheibe, Autoscheibe oder eine zu Isolationszwecken auf Glas zu klebende Folie sein.

Das Aufbringen der cholesterischen IR-reflektierenden Schicht auf das Substrat kann mittels üblicher Verfahren erfolgen, beispielsweise mittels Verfahren, die ausgewählt sind unter Luft-Rakelbeschichtung, Rakelbeschichtung, Luftmesserbeschichtung, Quetschbeschichtung, Imprägnierbeschichtung, Umkehrwalzenbeschichtung, Transferwalzenbeschichtung, Gravurbeschichtung, "kiss-coating" Gießbeschichtung, Spraybeschichtung, Spinnbeschichtung oder Druckverfahren, wie Hoch-, Tief-, Flexo-, Offset- oder Siebdruck.

Die erfindungsgemäße Zusammensetzung kann mit jedem geeigneten Verdünnungsmittel vor dem Aufbringen auf das Substrat verdünnt werden. Geeignete Verdünnungsmittel sind die vorstehend genannten.

Die Härtung der aufgebrachten IR-reflektierende(n) Schicht(en) kann thermisch, photochemisch oder durch Elektronenstrahl erfolgen.

Selbstverständlich muss die Härtung in der cholesterischen Phase und unter Erhalt der cholesterischen Phase erfolgen.

Werden mehrere Schichten aufgebracht, können diese jeweils einzeln aufgetragen, gegebenenfalls orientiert, gegebenenfalls getrocknet und gehärtet werden. Es ist jedoch ebenso möglich, mehrere oder auch alle aufzubringende Schichten in einem Auftragungsvorgang nass-in-nass auf den zu beschichtenden Gegenstand aufzubringen, gegebenenfalls gemeinsam zu trocknen und danach gemeinsam zu härten. Voraussetzung für das gleichzeitige Auftragen der cholesterischen Schichten ist jedoch, dass es nicht zu einer Interdiffusion zwischen verschiedenen Schichten mit unterschiedlichem Reflexionsverhalten kommt.

Für das gleichzeitige Auftragen der cholesterischen Schichten sind Gießverfahren besonders geeignet, insbesondere Messer- bzw. Rakelgießverfahren, Extrusions- bzw. Abstreifgießverfahren sowie das Kaskadengießverfahren. Die genannten Gießverfahren sind beispielsweise in der DE-A-19 504 930, der EP-A-431 630, der DE-A-3 733 031 sowie der EP-A-452 959 beschrieben, worauf hiermit ausdrücklich Bezug genommen wird.

Die erfindungsgemäße Zusammensetzung ist insbesondere zur Herstellung von farbig getönten Isolierfenstern oder wärmeisolierenden transparenten Baustoffen oder zur Isolierung von Wohn-, Büro- oder Industriebauten gegen Wärmestrahlung geeignet. Außerdem ist die erfindungsgemäße Zusammensetzung auch zur Verwendung im Automobilsektor, insbesondere zur Herstellung von wärmeisolierenden farbig getönten Verbundglasscheiben, besonders geeignet. Die mit der erfindungsgemäßen Wärmeisolationsbeschichtung versehenen Gegenstände sind daher ein weiterer Gegenstand der vorliegenden Erfindung.

Aufgrund der Gegenwart der Verbindung A weist die erfindungsgemäße Wärmeisolationsbeschichtung eine Farbtönung, vorzugsweise eine bläuliche oder grünliche Farbtönung, auf. Zudem absorbiert Verbindung A vorteilhafterweise IR-Strahlung, so dass die Wärmeisolationseigenschaften der Beschichtung verbessert werden, da nicht reflektierte IR-Strahlung absorbiert und nicht transmittiert wird.

Die erfindungsgemäße Wärmeisolationsbeschichtung weist eine nach ISO 9050 bestimmte Transmission von Licht im Wellenlängenbereich von 350 bis 750 nm von wenigstens 70 %, vorzugsweise wenigstens 72 % auf.

Gegenstand der Erfindung sind mit einer erfindungsgemäßen Wärmeisolations beschichtung versehene Gegenstände.

Die nachfolgenden Beispiele sollen die Erfindung veranschaulichen, ohne sie jedoch einzuschränken.

### Beispiel

Als nematisches achirales polymerisierbares Monomer verwendete man eine Verbindung der Formel X.

Als chirales polymerisierbares Monomer verwendete man eine Verbindung der Formel XI.

Als Verbindung A verwendete man eine Verbindung der Formel I, worin P für ein Quaterrylimid der Formel II steht, das am Quaterrylengerüst mit 6 tert-Alkylphenoxy-Resten symmetrisch substituiert ist (n = 6) und keine Halogen-Substituenten trägt (m = 0) und worin R² für Alkyl-substituiertes Phenyl steht. Diese Verbindung wird nachfolgend als Ia bezeichnet.

Als Lösungsmittel verwendete man Tetrahydrofuran (THF).

Ein Gemisch der Verbindungen X, XI und Ia, des Verlaufsmittels Byk 361 (10%ig; Fa. Byk Chemie) und des Photoinitiators Irgacure 184 der Fa. Ciba in den in Tabelle 1 aufgeführten Konzentrationen in 10 g THF wurde mit einem Rakel in der in Tabelle 1 jeweils aufgeführten Nassschichtdicke auf eine PET-Folie aufgetragen. Nach Abdampfen des Lösungsmittels bei ca. 85 °C bildete sich eine homogene, transparente, grüngetönte Schicht. Diese wurde mittels einer UV-Lampe gehärtet.

**Tabelle 1**

| Versuch | Menge (X) | Menge | Menge | Menge | Menge |
|---|---|---|---|---|---|
| | [g] | (XI) [g] | (Ia) [g] | (Byk 361) | (Irgacure) |
| | | | | [g] | [g] |
| A | 1,5 | - | 0,15 | 0,5 | 0,2 |
| B | 4,5 | - | 0,45 | 0,5 | 0,2 |
| C | 4,5 | 0,245 | 0,45 | 0,5 | 0,2 |

Die visuelle Beurteilung ergab die in Tabelle 2 dargestellten Ergebnisse.

**Tabelle 2**

| Versuch | Schichtdicke [µm] | Visuelle Beurteilung |
|---|---|---|
| **A** | 4,0 | transparent |
| | 5,5 | transparent |
| | 7,0 | beginnende Trübung |
| **B** | 3,8 | trüb |
| | 5,8 | zunehmende Trübung |
| | 7,1 | zunehmende Trübung |
| **C** | 3,5 | transparent |
| | 5,3 | transparent |
| | 6,6 | transparent |

Die Messung der Transmission bei den Versuchen B und C nach ISO 9050 bestätigte die visuelle Beurteilung. Die Ergebnisse sind in nachfolgender Tabelle 3 zusammengestellt.

**Tabelle 3**

| Versuch | Schichtdicke [µm] | Tᵥᵢₛ [%] | Tₛₒₗ [%] |
|---|---|---|---|
| B | 3,8 | 59,2 | 51,6 |
| C | 3,5 | 72,8 | 38,8 |

| | | | |
|---|---|---|---|
| Tᵥᵢₛ = Transmission im Wellenlängenbereich von 350 bis 750 nm Tₛₒₗ = Transmission im Wellenlängenbereich von 350 bis 2500 nm | | | |

Soll-Werte nach ISO 9050:
Tᵥᵢₛ > 70 %
Tₛₒₗ < 40 %

## Patentansprüche

1. Zusammensetzung, umfassend
i) wenigstens eine Strahlung absorbierende tert-Alkylphenoxysubstituierte polycyclische Verbindung A der allgemeinen Formel I 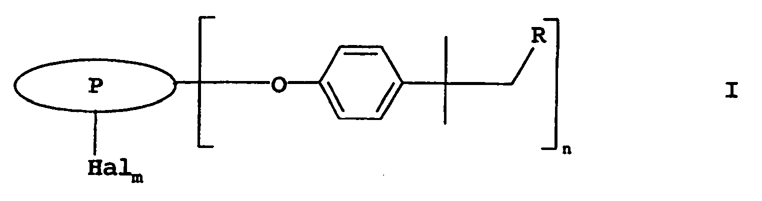 worin
P für einen gegenüber Basen und Nukleophilen stabilen, gegebenenfalls Arylsubstituenten tragenden, konjugierten polycylischen Rest steht, der keine Gruppierungen aus der Gruppe -CO-NH-CO-, -COOH und -CO-O-CO- enthält;
R für einen C₁-C₈-Alkyl-Rest steht, dessen Kohlenstoffkette durch eine oder mehrere Gruppierungen, ausgewählt unter -O-, -S-, -NR¹-, -CO- und -SO₂-, unterbrochen sein kann, wobei die Kohlenstoffkette gegebenenfalls ein- oder mehrfach substituiert ist mit gleichen oder verschiedenen Resten, ausgewählt unter C₁-C₆-Alkoxy oder einen über ein Stickstoffatom gebundenen, 5- bis 7-gliedrigen heterocyclischen Rest, der gegebenenfalls weitere Heteroatome enthält und/oder aromatisch ist, oder für einen C₅-C₈-Cycloalkyl-Rest steht, dessen Kohlenstoffgerüst durch eine oder mehrere Gruppierungen, ausgewählt unter -O-, -S-, -NR¹-, -CO- und -SO₂- unterbrochen sein kann, wobei das Kohlenstoffgerüst gegebenenfalls ein- oder mehrfach durch C₁-C₆-Alkyl substituiert ist;
R¹ für Wasserstoff oder C₁-C₆-Alkyl steht;
Hal für Chlor und/oder Brom steht;
m eine Zahl von 0 bis 15 bedeutet;und
n eine Zahl von 1 bis 16 bedeutet, wobei die Summe m + n ≤ 16 ist
und
ii) wenigstens eine härtbare IR-Reflektor-Komponente B, die
a) wenigstens ein achirales nematisches polymerisierbares Monomer und wenigstens ein chirales polymerisierbares Monomer;
b) wenigstens ein cholesterisches polymerisierbares Monomer;
c) wenigstens ein cholesterisches vernetzbares Polymer; oder
d) wenigstens ein cholesterisches Polymer in einem polymerisierbaren Verdünnungsmittel
enthält.

2. Zusammensetzung nach Anspruch 1, wobei in der Verbindung A der allgemeinen Formel I die Gruppierung P einen basenstabilen Rest aus der Gruppe der Naphthaline, Anthracene, Phenanthrene, Tetracene, Perylene, Terrylene, Quaterrylene, Pentarylene, Hexarylene, Anthrachinone, Indanthrone, N-substituierten Naphthalin-1,8-dicarbonsäuremonoimide, N,N'-disubstituierten Naphthalin-1,8:4,5-tetracarbonsäurediimide, N-substituierten Perylen-3,4-dicarbonsäuremonoimide, N,N'-disubstituierten Perylen-3,4:9,10-tetracarbonsäurediimide, N,N'-disubstituierten Terrylen-3,4:11,12-tetracarbonsäurediimide, N,N'-disubstituierten Quaterrylen-3,4:13,14-tetracarbonsäurediimide, Acridine, Carbazole, Dibenzofurane, Dinaphthofurane, Benzimidazole, Benzthiazole, Phenazine, Dioxazine, Chinacridone, Metallphthalocyanine, Metallnaphthalocyanine, Metallporphyrine, Cumarine, Dibenzofuranone, Dinaphthofuranone, Benzimidazolone, Indigoverbindungen, Thioindigoverbindungen, Chinophthalone, Naphthochinophthalone und Diketopyrrolopyrrole bedeutet.

3. Zusammensetzung nach einem der vorhergehenden Ansprüche, umfassend 0,01 bis 20 Gew.-% Verbindung A, bezogen auf das Gesamtgewicht der Komponente B.

4. Zusammensetzung nach einem der vorhergehenden Ansprüche, wobei Komponente B wenigstens ein achirales nematisches polymerisierbares Monomer und wenigstens ein chirales polymerisierbares Monomer enthält.

5. Zusammensetzung nach einem der vorhergehenden Ansprüche, umfassend weiterhin wenigstens einen Hilfstoff, der ausgewählt ist unter Photoinitiatoren, Bindemitteln, Verlaufsmitteln und Stabilisatoren gegen UV- und Witterungseinflüsse.

6. Verwendung einer Zusammensetzung nach einem der vorhergehenden Ansprüche zur Herstellung einer Wärmeisolationsbeschichtung.

7. Wärmeisolationsbeschichtung, umfassend wenigstens eine orientierte, gehärtete Schicht einer Zusamensetzung nach einem der Ansprüche 1 bis 5.

8. Wärmeisolationsbeschichtung nach Anspruch 7, umfassend wenigstens ein orientiertes, IR-Strahlung reflektierendes, gehärtetes cholesterisches Polymer, das eine Ganghöhe der helikalen Überstruktur aufweist, die einer Wellenlänge im IR-Spektralbereich entspricht.

9. Wärmeisolationsbeschichtung nach Anspruch 8, umfassend wenigstens 2 Schichten, wobei die die IR-Strahlung reflektierenden Polymere in den unterschiedlichen Schichten jeweils unterschiedliche Ganghöhen der helikalen Überstruktur, die Wellenlängen im IR-Spektralbereich entsprechen, und/oder entgegengesetzte Chiralitäten aufweisen.

10. Verfahren zur Herstellung einer Wärmeisolationsbeschichtung nach einem der Ansprüche 7 oder 8, bei dem man eine Zusammensetzung nach einem der Ansprüche 1 bis 5 auf ein Substrat aufträgt, gegebenenfalls orientiert und härtet.

11. Verfahren nach Anspruch 10, wobei die Härtung durch Polymerisation der Monomere der Gruppen a) oder b) oder des Lösungsmittels der Gruppe d) bzw. Vernetzung des Polymers der Gruppe c) erfolgt.

12. Mit einer Wärmeisolationsbeschichtung nach einem der Ansprüche 7 bis 9 versehene Gegenstände.

## Claims

1. A composition comprising
i) at least one radiation-absorbing tert-alkylphenoxy-substituted polycyclic compound A of the general formula I 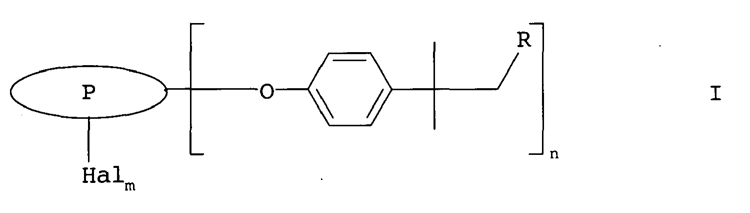 where
P is a conjugated polycyclic radical which is stable to bases and nucleophiles, optionally bears aryl substituents and comprises no group from the group consisting of -CO-NH-CO-, -COOH and -CO-O-CO-;
R is C₁-C₈-alkyl, whose carbon chain may be interrupted by one or more groups selected from the group consisting of -O-, -S-, -NR¹-, -CO- and -SO₂- and which is optionally monosubstituted or polysubstituted by identical or different radicals selected from the group consisting of C₁-C₆-alkoxy and a 5- to 7-membered heterocyclic radical which is attached via a nitrogen atom and if appropriate comprises further heteroatoms and/or is aromatic; or R is C₅-C₈-cycloalkyl, whose carbon framework may be interrupted by one or more groups selected from the group consisting of -O-, -S-, -NR¹-, -CO- and -SO₂- and which is optionally monosubstituted or polysubstituted by C₁-C₆-alkyl;
R¹ is hydrogen or C₁-C₆-alkyl;
Hal is chlorine and/or bromine;
m is from 0 to 15; and
n is from 1 to 16, subject to the proviso that the sum m + n is ≤ 16
and
ii) at least one curable IR-reflecting component B which comprises
a) at least one achiral nematic polymerizable monomer and at least one chiral polymerizable monomer;
b) at least one cholesteric polymerizable monomer;
c) at least one cholesteric crosslinkable polymer; or
d) at least one cholesteric polymer in a polymerizable diluent.

2. The composition according to claim 1, wherein the group P in the compound A of the general formula I is a base-stable radical selected from the group consisting of naphthalenes, anthracenes, phenanthrenes, tetracenes, perylenes, terrylenes, quaterrylenes, pentarylenes, hexarylenes, anthraquinones, indanthrones, N-substituted naphthalene-1,8-dicarboxylic monoimides, N,N'-disubstituted naphthalene-1,8:4,5-tetracarboxylic diimides, N-substituted perylene-3,4-dicarboxylic monoimides, N,N'-disubstituted perylene-3,4:9,10-tetracarboxylic diimides, N,N'-disubstituted terrylene-3,4:11,12-tetracarboxylic diimides, N,N'-disubstituted quaterrylene-3,4:13,14-tetracarboxylic diimides, acridines, carbazoles, dibenzofurans, dinaphthofurans, benzimidazoles, benzothiazoles, phenazines, dioxazines, quinacridones, metal phthalocyanines, metal naphthalocyanines, metal porphyrins, cumarins, dibenzofuranones, dinaphthofuranones, benzimidazolones, indigo compounds, thioindigo compounds, quinophthalones, naphthoquinophthalones and diketopyrrolopyrroles.

3. The composition according to any of the preceding claims, which comprises from 0.01 to 20% by weight of compound A, based on the total weight of compound B.

4. The composition according to any of the preceding claims, wherein component B comprises at least one achiral nematic polymerizable monomer and at least one chiral polymerizable monomer.

5. The composition according to any of the preceding claims, which further comprises at least one auxiliary selected from the group consisting of photoinitiators, binders, leveling agents and UV and weathering stabilizers.

6. The use of a composition according to any of the preceding claims for producing a heat-insulating coating.

7. A heat-insulating coating comprising at least one oriented, cured layer of a composition according to any of claims 1 to 5.

8. The heat-insulating coating according to claim 7, which comprises at least one oriented, IR-reflecting, cured cholesteric polymer which has a helical superstructures pitch which corresponds to a wavelength in the IR spectral range.

9. The heat-insulating coating according to claim 8, which comprises at least two layers, the IR-reflecting polymers in the different layers each having different helical superstructures pitches which correspond to wavelengths in the IR spectral range, and/or opposite chiralities.

10. A process for producing a heat-insulating coating according to claim 7 or 8, which comprises applying to a substrate a composition according to any of claims 1 to 5, and, if appropriate, orienting said composition and curing said composition.

11. The process according to claim 10, wherein curing is carried out by polymerizing the monomers of groups a) or b) or the solvent of group d) or crosslinking of the polymer of group c).

12. An article having thereon a heat-insulating coating according to any of claims 7 to 9.

## Revendications

1. Composition comprenant :
i) au moins un composé A polycyclique d'absorption de rayonnement, substitué par un groupement tert-alkylphénoxy, de formule générale I : 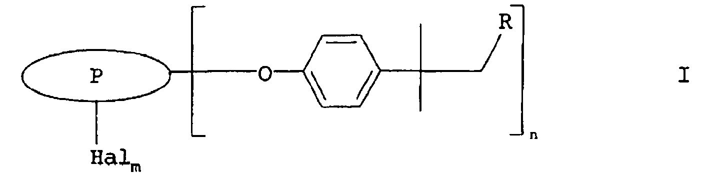 dans laquelle :
P représente un radical polycyclique conjugué, stable vis-à-vis des bases et des nucléophiles et portant, éventuellement, des substituants aryle, qui ne contient aucun des groupements issus du groupe constitué de -CO-NH-CO-, -COOH et -CO-O-CO-
R représente un radical alkyle en C₁-C₈, dont la chaîne carbonée peut être interrompue par un ou plusieurs groupements choisis parmi -O-, -S-, -NR¹-, -CO- et -SO₂-, la chaîne carbonée en question étant, éventuellement, substituée une ou plusieurs fois par des radicaux identiques ou différents choisis parmi un alcoxy en C₁-C₆ ou un radical hétérocyclique ayant 5 à 7 éléments, relié par un atome d'azote, qui contient éventuellement d'autres hétéroatomes et/ou qui est aromatique, ou représente un radical cycloalkyle en C₅-C₈, dont l'ossature carbonée peut être interrompue par un ou plusieurs groupements choisis parmi -O-, -S-, -NR¹-, -CO- et -SO₂-, l'ossature carbonée étant substituée, éventuellement, une ou plusieurs fois par un alkyle en C₁-C₆ ;
R¹ représente l'hydrogène ou un alkyle en C₁-C₆ ;
Hal représente le chlore et/ou le brome ;
m est un nombre de 0 à 15 ; et
n est un nombre de 1 à 16, avec la somme m + n ≤ 16,
et
ii) au moins un composant B réfléchissant les IR, durcissable, qui contient :
a) au moins un monomère nématique achiral polymérisable et au moins un monomère chiral polymérisable ;
b) au moins un monomère cholestérique polymérisable ;
c) au moins un polymère cholestérique réticulable ; ou
d) au moins un polymère cholestérique dans un diluant polymérisable.

2. Composition selon la revendication 1, dans laquelle le groupement P, présent dans le composé A de formule générale I, représente un radical stable vis-à-vis des bases, que l'on choisit dans le groupe des naphtalènes, des anthracènes, des phénanthrènes, des tétracènes, des pérylènes, des terrylènes, des quaterrylènes, des pentarylènes, des hexarylènes, des anthraquinones, des indanthrones, des monoimides d'acide naphtalène-1,8-dicarboxylique N-substitués, des diimides d'acide naphtalène-1,8:4,5-tétracarboxylique N,N'-disubstitués, des monoimides d'acide pérylène-3,4-dicarboxylique N-substitués, des diimides d'acide pérylène-3,4:9,10-tétracarboxylique N,N'-disubstitués, des diimides d'acide terrylène-3,4:11,12-tétracarboxylique N,N'-disubstitués, des diimides d'acide quaterrylène-3,4:13,14-tétracarboxylique N,N'-disubstitués, des acridines, des carbazoles, des dibenzofuranes, des dinaphtofuranes, des benzimidazoles, des benzothiazoles, des phénazines, des dioxazines, des quinacridones, des phtalocyanines de métal, des naphtalocyanines de métal, des porphyrines de métal, des coumarines, des dibenzofuranones, des dinaphtofuranones, des benzimidazolones, des composés indigo, des composés thioindigo, des quinophtalones, des naphtoquinophtalones et des dicétopyrrolopyrroles.

3. Composition selon l'une quelconque des revendications précédentes, comprenant 0,01 à 20 % en poids du composé A par rapport au poids total du composant B.

4. Composition selon l'une quelconque des revendications précédentes, dans laquelle le composant B contient au moins un monomère nématique achiral polymérisable et au moins un monomère chiral polymérisable.

5. Composition selon l'une quelconque des revendications précédentes, comprenant en outre au moins un adjuvant, qui est choisi parmi des photoinitiateurs, des liants, des agents d'écoulement et des agents de stabilisation contre l'influence des UV et des conditions atmosphériques.

6. Utilisation d'une composition selon l'une quelconque des revendications précédentes pour fabriquer un revêtement d'isolation thermique.

7. Revêtement d'isolation thermique, comprenant au moins une couche durcie, orientée, d'une composition selon l'une quelconque des revendications 1 à 5.

8. Revêtement d'isolation thermique selon la revendication 7, comprenant au moins un polymère cholestérique durci, orienté et réfléchissant un rayonnement IR, qui présente un pas de la superstructure hélicoïdale qui correspond à une longueur d'onde dans la plage spectrale de l'infrarouge.

9. Revêtement d'isolation thermique selon la revendication 8, comprenant au moins 2 couches, dans lequel les polymères réfléchissant le rayonnement IR dans les différentes couches présentent, respectivement, des pas différents de la superstructure hélicoïdale qui correspondent à des longueurs d'onde dans la plage spectrale de l'infrarouge, et/ou des chiralités opposées.

10. Procédé de fabrication d'un revêtement d'isolation thermique selon l'une quelconque des revendications 7 ou 8, dans lequel on applique sur un substrat une composition selon l'une quelconque des revendications 1 à 5, que l'on soumet, éventuellement, à une orientation et à un durcissement.

11. Procédé selon la revendication 10, dans lequel le durcissement est obtenu par polymérisation des monomères du groupe a) ou b) ou du solvant du groupe d), ou par réticulation du polymère du groupe c).

12. Objets dotés d'un revêtement d'isolation thermique selon l'une quelconque des revendications 7 à 9.
